# EUROPEAN PATENT APPLICATION

(11) **EP 4 601 067 A1**
(43) Date of publication of application: **13.08.2025**
(21) Application number: 24785303.9
(22) Date of filing: 05.04.2024
(51) Int. Cl.: H01M 10/0567, H01M 4/525, H01M 4/505, H01M 10/0569, H01M 10/052, H01M 4/02

(54) **LITHIUM SECONDARY BATTERY**

(30) Priority: 07.04.2023 KR 20230046337; 15.12.2023 KR 20230183780
(71) Applicant: LG Energy Solution, Ltd., Seoul 07335 (KR)
(72) Inventor: JI, Su Hyeon, Daejeon 34122 (KR); LEE, Chul Haeng, Daejeon 34122 (KR); LEE, Jung Min, Daejeon 34122 (KR); BAEK, Ga Young, Daejeon 34122 (KR); YEOM, Chul Eun, Daejeon 34122 (KR)
(74) Representative: Hoffmann Eitle
(86) International application number: PCT/KR2024/004496
(87) International publication number: WO 2024/210604

(57) **Abstract**

A lithium secondary battery includes a positive electrode; a negative electrode; a separator interposed between the positive electrode and the negative electrode; and a non-aqueous electrolyte. The positive electrode includes a positive electrode active material, the positive electrode material includes a lithium transition metal oxide represented by a specific chemical formula, the non-aqueous electrolyte includes a lithium salt, an organic solvent, and an additive, the additive includes a first additive and a second additive, the first additive includes a phosphate-based additive having a silyl group, and the second additive includes a compound represented by a specific chemical formula.

## Description

### TECHNICAL FIELD

### Cross-reference to related applications

This application is based on and claims priority from Korean Patent Application No. 10-2023-0046337, filed on April 7, 2023 and Korean Patent Application No. 10-2023-0183780, filed on December 15, 2023, with the Korean Intellectual Property Office, the disclosure of which is incorporated herein in its entirety by reference.

### Technical field

The present disclosure relates to lithium secondary batteries.

### BACKGROUND ART

Recently, the applications of lithium secondary batteries have rapidly expanded not only from the supply of power for electricity, electronics, communication, and electronic devices such as computers but also to the storage and supply of power for large-sized devices such as automobiles and energy storage systems. Consequently, there is an increasing demand for secondary batteries with a high capacity, high power, and high stability.

The lithium secondary battery generally includes a positive electrode containing a positive electrode active material, a negative electrode containing a negative electrode active material, an electrolyte that serves as a medium for transferring lithium ions, and a separator. In this case, the negative electrode active material may be a carbon-based active material or a silicon-based active material. In addition, the positive electrode active material may be lithium transition metal oxide such as lithium cobalt oxide (LiCoO₂), lithium nickel oxide (LiNiO₂), or lithium nickel-cobalt-manganese composite oxide.

Meanwhile, improvements are being made to the characteristics of each of the positive electrode, the negative electrode, the electrolyte, and the separator to construct high-capacity secondary batteries.

### DISCLOSURE OF THE INVENTION

### Technical problem

The present disclosure provides a lithium secondary battery using a lithium transition metal oxide in which the content of nickel as a positive electrode active material is reduced to a certain level, thereby providing a lithium secondary battery with improved lifespan performance and storage performance under high voltage operation.

### Technical solution

The present disclosure provides a lithium secondary battery including a positive electrode; a negative electrode; a separator interposed between the positive electrode and the negative electrode; and a non-aqueous electrolyte, in which the positive electrode includes a positive electrode active material, the positive electrode material includes a lithium transition metal oxide represented by Formula X below, the non-aqueous electrolyte includes a lithium salt, an organic solvent, and an additive, the additive includes a first additive and a second additive, the first additive includes a phosphate-based additive having a silyl group, and the second additive includes a compound represented by Formula 1 below:

(Formula X) Li₁₊ₓ[NiₐCo_{b}Mn_{c}M¹_{d}]O_{2+w}

in Formula X, x, a, b, c, d, and w satisfy 0≤x≤0.5, a+b+c+d = 1, 0.5≤a≤0.7, 0<b≤0.15, c=1-a-b-d, 0≤d≤0.1, 0≤b/a≤0.2, 1≤a/c≤3, and 0≤w≤1; and M¹ is at least one selected from W, Cu, Fe, V, Cr, Ti, Zr, Zn, Al, In, Ta, Y, La, Sr, Ga, Sc, Gd, Sm, Ca, Ce, Nb, Mg, B, and Mo, 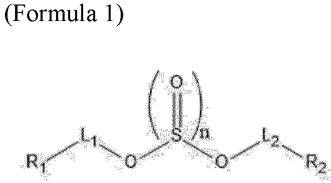
in Formula 1, n is 1 or 2; L₁ and L₂ are each independently a direct bond or a substituted or unsubstituted alkylene group having 1 to 6 carbon atoms; R₁ and R₂ are each independently selected from a substituent represented by Formula 2: 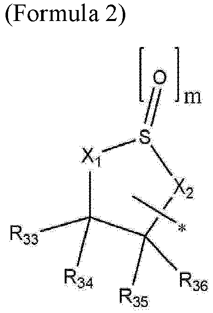
in Formula 2, m is 1 or 2; X₁ and X₂ are each independently -O- or -C(R₃₁)(R₃₂)-, provided that at least one of X₁ and X₂ is -O-; R₃₁ to R₃₆ are each independently hydrogen, an alkyl group having 1 to 6 carbon atoms, -C(=O)-R₄, or -R₅-O-C(=O)-R₆; R₄ and R₆ are each independently a substituted or unsubstituted alkyl group having 1 to 6 carbon atoms, an alkenyl group having 2 to 20 carbon atoms, an alkynyl group having 2 to 20 carbon atoms, or a substituted or unsubstituted aryl group having 6 to 20 carbon atoms; R₅ is a substituted or unsubstituted alkylene group having 1 to 6 carbon atoms; each substituent of L₁, L₂, R₄, R₅, and R₆ is at least one independently selected from the group consisting of deuterium, -F, -Cl, -Br, -I, -CN, -NO₂, and -SO₃; * is a binding position to L₁ or L₂; when L₁ and L₂ are both direct bonds, then R₁ and R₂ are not simultaneously CS-7 below; and when L₁ and L₂ are both methylene groups, and n is 2, then R₁ and R₂ are not simultaneously CS-2 below:

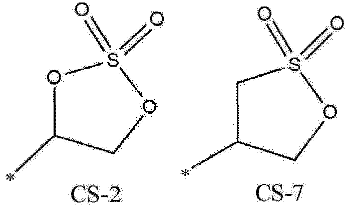

### ADVANTAGEOUS EFFECTS

The lithium secondary battery of the present disclosure uses lithium transition metal oxide in which nickel, cobalt, and manganese are adjusted to a specific range as a positive electrode active material, and includes a first additive (e.g., tris(trimethylsilyl) phosphate) and a second additive (containing a cyclic sulfur oxide represented by a specific chemical formula) as additives to the non-aqueous electrolyte. According to the present disclosure, the organic action of the first additive and the second additive may form a film having a reduced resistance and excellent durability on the positive electrode, thereby reducing the resistance while improving the lifespan performance and storage performance of lithium secondary batteries that require the use of high voltage.

### MODE FOR CARRYING OUT THE INVENTION

In the following detailed description, reference is made to the accompanying drawings which form a part hereof. The illustrative embodiments described in the detailed description, drawings, and claims are not meant to be limiting. Other embodiments may be utilized, and other changes may be made without departing from the spirit or scope of the subject matter presented herein.

In the descriptions herein, terms such as "include," "provide," and "have" are intended to designate the presence of features, numerals, steps, operations, components, and parts described herein, or combinations thereof, but should not be interpreted to exclude the possibility of presence or addition of one or more other features, numerals, steps, operations, components, parts, or combinations thereof.

Meanwhile, unless otherwise specified herein, "*" means a connected portion (bonding site) between terminal moieties of the same or different atoms or chemical formulas.

Further, when referring to "a to b carbon atoms" in the descriptions, "a" and "b" refer to the number of carbon atoms contained in a particular functional group. That is, the functional group may include "a" to "b" carbon atoms. For example, an "alkyl group having 1 to 5 carbon atoms" refers to an alkyl group containing 1 to 5 carbon atoms, i.e. CH₃-, CH₃CH₂-, CH₃CH₂CH₂-, (CH₃)₂CH-, CH₃CH₂CH₂CH₂-, (CH₃)₂CHCH₂-, CH₃CH₂CH₂CH₂CH₂-, (CH₃)₂CHCH₂CH₂-, etc.

Further, in the descriptions herein, all alkyl groups or aryl groups may be substituted or unsubstituted. Unless otherwise defined, the term "substituted" means that at least one hydrogen bonded to the carbon is substituted with an element other than hydrogen, for example, an alkyl group having 1 to 20 carbon atoms, an alkenyl group having 2 to 20 carbon atoms, an alkynyl group having 2 to 20 carbon atoms, an alkoxy group having 1 to 20 carbon atoms, a cycloalkyl group having 3 to 12 carbon atoms, a cycloalkenyl group having 3 to 12 carbon atoms, a heterocycloalkyl group having 3 to 12 carbon atoms, a heterocycloalkenyl group having 3 to 12 carbon atoms, an aryloxy group having 6 to 12 carbon atoms, a halogen atom, a fluoroalkyl group having 1 to 20 carbon atoms, an aryl group having 6 to 20 carbon atoms, a heteroaryl group having 2 to 20 carbon atoms, or a haloaryl group having 6 to 20 carbon atoms.

As used herein, the words "about," "approximately," and "substantially" are used to mean a range or approximation of a numerical value or degree, taking into account inherent manufacturing and material tolerances, and are used to prevent infringers from taking unfair advantage of the disclosure where precise or absolute numbers are provided to aid in the understanding of the disclosure.

In order to increase the energy density of lithium secondary battery positive electrodes, lithium nickel-cobalt-manganese composite transition metal oxides having a nickel content of 80 mol% or more relative to the transition metal have been studied. However, increasing the nickel content of the lithium nickel-cobalt-manganese composite transition metal oxides has been shown to reduce the thermal stability of the positive electrode.

To avoid the problem, lowering the nickel content in a lithium nickel-cobalt-manganese composite transition metal oxide requires an increase in the drive voltage to achieve the required energy density, and the present disclosure provides a lithium secondary battery in which the nickel, cobalt, and manganese are controlled in a certain range by using a lithium transition metal oxide as the positive electrode active material and including certain additives in the non-aqueous electrolyte, so that electrolyte side reactions at the positive electrode may be reduced even under the high voltage drive.

Hereinafter, the present disclosure will be described in more detail.

### Lithium Secondary Battery

The present disclosure relates to a lithium secondary battery.

A lithium secondary battery according to the present disclosure includes a positive electrode; a negative electrode; a separator interposed between the positive electrode and the negative electrode; and a non-aqueous electrolyte, in which the positive electrode includes a positive electrode active material, the positive electrode material includes a lithium transition metal oxide represented by Formula X below, the non-aqueous electrolyte includes a lithium salt, an organic solvent, and an additive, the additive includes a first additive and a second additive, the first additive includes a phosphate-based additive having a silyl group, and the second additive includes a compound represented by Formula 1 below:

(Formula X) Li₁₊ₓ[NiₐCo_{b}Mn_{c}M¹_{d}]O_{2+w}

in Formula X, x, a, b, c, d, and w satisfy 0≤x≤0.5, a+b+c+d = 1, 0.5≤a≤0.7, 0<b≤0.15, c=1-a-b-d, 0≤d≤0.1, 0≤b/a≤0.2, 1≤a/c≤3, and 0≤w≤1; and M¹ is at least one selected from W, Cu, Fe, V, Cr, Ti, Zr, Zn, Al, In, Ta, Y, La, Sr, Ga, Sc, Gd, Sm, Ca, Ce, Nb, Mg, B, and Mo, 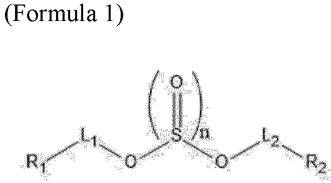
in Formula 1, n is 1 or 2; L₁ and L₂ are each independently a direct bond or a substituted or unsubstituted alkylene group having 1 to 6 carbon atoms; R₁ and R₂ are each independently selected from a substituent represented by Formula 2: 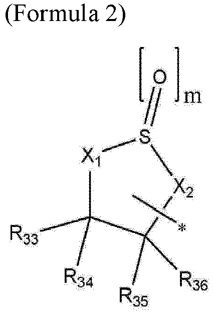
in Formula 2, m is 1 or 2, X₁ and X₂ are each independently -O- or -C(R₃₁)(R₃₂)-, provided that at least one of X₁ and X₂ is -O-; R₃₁ to R₃₆ are each independently hydrogen, an alkyl group having 1 to 6 carbon atoms, -C(=O)-R₄, or -R₅-O-C(=O)-R₆, R₄ and R₆ are each independently a substituted or unsubstituted alkyl group having 1 to 6 carbon atoms, an alkenyl group having 2 to 20 carbon atoms, an alkynyl group having 2 to 20 carbon atoms, or a substituted or unsubstituted aryl group having 6 to 20 carbon atoms; R₅ is a substituted or unsubstituted alkylene group having 1 to 6 carbon atoms; each substituent of L₁, L₂, R₄, R₅, and R₆ is at least one independently selected from the group consisting of deuterium, -F, -Cl, -Br, -I, -CN, -NO₂, and -SO₃; * is a binding position to L₁ or L₂; when L₁ and L₂ are both direct bonds, then R₁ and R₂ are not simultaneously CS-7 below; and when L₁ and L₂ are both methylene groups, and n is 2, then R₁ and R₂ are not simultaneously CS-2 below:

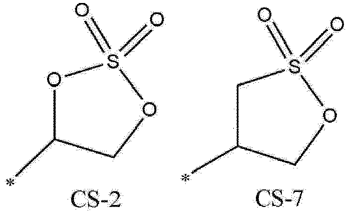

The lithium secondary battery includes a positive electrode; a negative electrode; a separator; and a non-aqueous electrolyte. For example, the lithium secondary battery includes a positive electrode; a negative electrode; a separator interposed between the positive electrode and the negative electrode; and a non-aqueous electrolyte. The lithium secondary battery may be manufactured by storing, in a battery case, an electrode assembly including a positive electrode, a negative electrode, and a separator interposed between the positive electrode and the negative electrode; and injecting a non-aqueous electrolyte into the battery case.

### (1) Positive Electrode

The positive electrode includes a positive electrode active material.

The positive electrode active material according to an embodiment includes a lithium transition metal oxide represented by Formula X:

(Formula X) Li₁₊ₓ[NiₐCo_{b}Mn_{c}M¹_{d}]O_{2+w}

in Formula X, x, a, b, c, d, and w satisfy 0≤x≤0.5, a+b+c+d = 1, 0.5≤a≤0.7, 0<b≤0.15, c=1-a-b-d, 0≤d≤0.1, 0≤b/a≤0.2, 1≤a/c≤3, and 0≤w≤1; and M¹ is at least one selected from W, Cu, Fe, V, Cr, Ti, Zr, Zn, Al, In, Ta, Y, La, Sr, Ga, Sc, Gd, Sm, Ca, Ce, Nb, Mg, B, and Mo.

The lithium transition metal oxide represented by Formula X is distinguished from, for example, a high-nickel lithium transition metal oxide having a Ni content greater than 70 mol% relative to metal except lithium. The high-nickel lithium transition metal oxide is undesirable in that it contains a large amount of nickel, which causes deterioration of thermal stability, and, especially at high voltages, it degenerates into a rock salt form due to intralattice structure changes, which causes decrease in lithium mobility and performance degradation.

Meanwhile, the compound represented by Formula X has a relatively small nickel content compared to the high-nickel lithium transition metal oxide, and thus, needs to be driven at a high voltage (*e.g.,* 4.35 V or more) to increase the energy density of the positive electrode. However, when driving at such a high voltage, for example, oxygen is removed due to changes in the oxidation number of nickel and cobalt, so that electrolyte side reactions is intensified, which causes a problem in that lifespan performance and storage performance are greatly reduced.

In order to combine high energy density with excellent lifespan performance and storage performance, the lithium secondary battery according to the present disclosure uses a lithium transition metal oxide represented by formula X as a positive electrode active material, and uses a combination of a first additive (containing tris(trimethylsilyl) phosphate) and a second additive (containing cyclic sulfur oxide represented by Formula 1) as an additive to the non-aqueous electrolyte. The lithium secondary battery of the present disclosure may form a film with reduced resistance and excellent durability on the positive electrode by the organic action of the first additive and the second additive added to the non-aqueous electrolyte, and may improve the lifespan performance and storage performance of the lithium secondary battery, especially when the use of high voltage is required.

Meanwhile, in the case of high-nickel lithium transition metal oxides such as Li[Ni_{0.8}Co_{0.1}Mn_{0.1}]O₂, the ratio of Ni among the transition metal or the molar ratio of Ni/Mn is relatively high, and the axial change in the lattice due to the increase and decrease of Ni oxide number during the charge and discharge process is large. Thus, the surface side reaction is intensified by Ni, which is unstable in terms of energy. Therefore, it is not easy to express the performance improvement effect by forming a positive electrode film through the additives. Further, high-nickel lithium transition metal oxides such as Li[Ni_{0.8}Co_{0.1}Mn_{0.1}]O₂ have a relatively high molar ratio of Ni/Mn, and a large amount of rock salt structure exists on the surface due to phase change during high-voltage operation, which does not facilitate the insertion and removal of lithium ions and the formation of positive electrode films by the combination of the additives. In addition, in the case of lithium transition metal oxides that do not satisfy Formula X, such as Li[Ni_{0.6}Co_{0.2}Mn_{0.2}]O₂, the ratio of Co in the transition metal is relatively high, which increases the irreversibility of the structure. Therefore, it is not easy to implement the performance improvement effect by forming positive electrode film through additives. Meanwhile, in the case of the compound represented by Formula X, the desired improvement in lifespan performance and storage performance is easily achieved even by using the first and second additives in combination.

In Formula X, x may be about 0≤x≤0.5, for example, about 0≤x≤0.2.

In Formula X, a may be about 0≤a≤0.7, for example, about 0.55≤a≤0.65.

In Formula X, b is about 0≤b≤0.15. b corresponds to the molar percentage of Co in the metal other than lithium in the lithium transition metal oxide represented by Formula X. According to the present disclosure, there is a cost advantage in reducing the Co content, and the structural stability of the positive electrode active material may be improved by increasing the relative proportion of Mn. For example, in Formula X, b may be about 0≤b≤0.1.

In Formula X, b/a is about 0≤b/a≤0.2. When b/a exceeds 0.2, the ratio of Co ratio in the transition metal is relatively high, which increases the irreversibility within the structure. Thus, the performance improvement effect by forming a positive electrode film through additives may be limited. For example, in Formula X, b/a may be about 0.05≤b≤0.2.

In Formula X, c=1-a-b-d, and a/c is about 1≤a/c≤3. c corresponds to the molar percentage of Mn in the metal other than lithium in the lithium transition metal oxide represented by Formula X. According to the present disclosure, the structural stability of the positive electrode active material may be improved by adjusting the molar ratio of Ni to Mn to about 1≤a/c≤3. For example, a/c may be about 1.5≤a/c≤2.5.

In Formula X, M¹ may be understood as a doped element of lithium transition metal oxide, and may be, for example, at least one selected from W, Cu, Fe, V, Cr, Ti, Zr, Zn, Al, In, Ta, Y, La, Sr, Ga, Sc, Gd, Sm, Ca, Ce, Nb, Mg, B, and Mo. In this case, d may be about 0≤d≤0.1, for example, about 0≤d≤0.05.

In Formula X, a/(b×c) may be about 18 to 50, for example, about 18 to 40, or about 20 to 35. Within the above range, the contents of nickel, cobalt, and manganese in Formula A are harmoniously adjusted, thereby improving the performance improvement effect by forming a positive electrode film through additives and, at the same time, improving the structural stability of the positive electrode active material.

The positive electrode active material may be in the form of particles. For example, the positive electrode active material may be in the form of a monoparticle composed of one single nodule or a pseudo-monoparticle composed of a complex of 30 or fewer nodules. Alternatively, the positive electrode active material may be a pseudo-monoparticle that is a composite of 2 to 20 nodules, for example, 2 to 10 nodules, or may be in a form containing the composite. In this case, particle cracking of the positive electrode active material is prevented when manufacturing electrodes, and internal cracking due to volume expansion/contraction of the nodules during charge/discharge is prevented, thereby improving the high-temperature lifespan characteristics and high-temperature storage characteristics.

The average particle diameter (D50) of the positive electrode active material may be about 1 µm to 10 µm, for example, about 2 µm to 8 µm, about 3 µm to 7 µm, about 3 µm to 5 µm, or about 3.5 µm to 4.5 µm. When the above-mentioned range is satisfied, processability in electrode manufacturing becomes excellent, electrochemical properties are increased due to high electrolyte impregnation, resistance is reduced, and output characteristics are improved.

The specific surface area of the positive electrode active material is about 0.1 m^{2/}g to 3.0 m²/g, for example, about 0.3 m²/g to 2.5 m²/g, about 0.4 m²/g to 1.8 m²/g, about 0.5 m²/g to 1.0 m²/g, or about 0.7 m²/g to 0.9 m²/g. When the above-mentioned range is satisfied, the rolling characteristics of the electrode is improved, particle breakage is reduced, and side reactions with the electrolyte are suppressed.

The positive electrode may include a positive electrode collector; and a positive electrode active material layer disposed on at least one side of the positive electrode collector. At this time, the positive electrode active material may be included in the positive electrode active material layer.

The positive electrode collector may be, without being particularly limited, any positive electrode collector that has high conductivity without causing chemical changes in the battery. For example, the positive electrode collector may include at least one selected from the group consisting of copper, stainless steel, aluminum, nickel, titanium, calcined carbon, and aluminum-cadmium alloy. According to one embodiment, the positive electrode collector may include aluminum.

The positive electrode collector may typically have a thickness of about 3 µm to 500 µm.

The positive electrode collector may have fine irregularities formed on the surface to strengthen the bonding force of the positive electrode active material. For example, the positive electrode collector may be used in various forms, such as a film, a sheet, a foil, a net, a porous body, a foam, and a non-woven body.

The positive electrode active material layer may be disposed on at least one side of the positive electrode collector, for example, one side or both sides of the positive electrode collector.

The positive electrode active material may be included in the positive electrode active material layer in an amount of about 80% by weight to 99% by weight, for example, about 92% by weight to 98.5% by weight, in consideration of sufficient capacity of the positive electrode active material.

Since the positive electrode active material has been described above, further descriptions will be omitted.

The positive electrode active material layer may further include a binder and/or a conductive material along with the positive electrode active material.

The binder is a component that aids in binding of the active material and the conductive material and binding to the collector, and may include, for example, at least one selected from the group consisting of polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene terpolymer (EPDM), sulfonated EPDM, styrene-butadiene rubber, and fluororubber. According to one embodiment, the binder may include polyvinylidene fluoride.

The binder may be included in the positive electrode active material layer in an amount of about 1% by weight to 20% by weight, for example, about 1.2% by weight to 10% by weight, in order to secure sufficient binding force between components such as the positive electrode active material.

The conductive material may be used to assist and improve conductivity in secondary batteries, and may be, without being particularly limited, any material that has conductivity without causing chemical changes. For example, the positive electrode conductive material may include at least one selected from the group consisting of graphite, such as natural graphite or artificial graphite; carbon black, such as carbon black, acetylene black, Ketchen black, channel black, furnace black, lamp black, and thermal black; conductive fibers, such as carbon fibers and metal fibers; conductive tubes, such as carbon nanotubes; fluorocarbon; metal powders, such as aluminum and nickel powders; conductive whiskers, such as zinc oxide and potassium titanate; conductive metal oxides, such as titanium oxide; polyphenylene derivatives. According to one embodiment, the positive electrode conductive material may include carbon nanotubes in terms of improving conductivity.

The conductive material may be included in the positive electrode active material layer in an amount of about 1% by weight to 20% by weight, for example, about 1.2% by weight to 10% by weight in terms of ensuring sufficient electrical conductivity.

The thickness of the positive electrode active material layer may be about 30 µm to 400 µm, for example, about 40 µm to 200 µm.

The positive electrode may be manufactured by coating a positive electrode slurry containing a positive electrode active material and optionally a binder, a conductive material, and a solvent for forming a positive electrode slurry on the positive electrode collector, followed by drying and rolling.

The solvent for forming the positive electrode slurry may include an organic solvent such as N-methyl-2-pyrrolidone (NMP). The solid content of the positive electrode slurry may be about 40% by weight to 90% by weight, for example, about 50% by weight to 80% by weight.

### (2) Negative Electrode

The negative electrode may face the positive electrode.

The negative electrode includes a negative electrode active material.

The negative electrode active material is a material capable of reversibly inserting/extracting lithium ions, and may include at least one selected from the group consisting of a carbon-based active material, a (semi)metal-based active material, and lithium metal. For example, the negative electrode active material may include at least one selected from a carbon-based active material and a (semi-)metal-based active material.

The carbon-based active material may include at least one selected from the group consisting of artificial graphite, natural graphite, hard carbon, soft carbon, carbon black, graphene, and fibrous carbon. For example, the carbon-based active material may include at least one member selected from the group consisting of artificial graphite and natural graphite.

The average particle diameter (D50) of the carbon-based active material may be about 10 µm to 30 µm, for example, about 15 µm to 25 µm in terms of ensuring structural stability during charging and discharging, and reducing side reactions with the electrolyte.

For example, the (semi)metal-based active material may include at least one (semi)metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; an alloy of lithium and at least one (semi)metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; an oxide of at least one (semi)metal selected from the group consisting of Cu, Ni, Na, K, Rb, Cs, Fr, Be, Mg, Ca, Sr, Si, Sb, Pb, In, Zn, Ba, Ra, Ge, Al, V, Ti, and Sn; lithium titanium oxide (LTO); and lithium vanadium oxide.

According to an embodiment, the (semi)metal-based active material may include a silicon-based active material.

The silicon-based active material may include a compound represented by SiOₓ (0≤x<2). In the case of SiO₂, lithium cannot be stored because it does not react with lithium ions, so x is selected to be within the above range excluding 2. According to an embodiment, the silicon-based active material may be SiO.

The average particle diameter (D50) of the silicon-based active material may be about 1 µm to 30 µm, for example, about 2 µm to 15 µm in terms of ensuring structural stability during charging and discharging, and reducing side reactions with the electrolyte.

The negative electrode may include a negative electrode collector; and a negative electrode active material layer disposed on at least one side of the negative electrode collector. At this time, the negative electrode active material may be included in the negative electrode active material layer.

The negative electrode collector may be, without being particularly limited, any negative electrode collector that has high conductivity without causing chemical changes in the battery. For example, the negative electrode collector may be copper, stainless steel, aluminum, nickel, titanium, calcined carbon, copper, or stainless steel subjected to surface treatment with carbon, nickel, titanium, or silver, and aluminum-cadmium alloy.

The negative electrode collector may typically have a thickness of about 3 µm to 500 µm.

The negative electrode collector may have fine irregularities formed on the surface to strengthen the bonding force of the negative electrode active material. For example, the negative electrode collector may be used in various forms, such as a film, a sheet, a foil, a net, a porous body, a foam, and a non-woven body.

The negative electrode active material layer may be disposed on at least one side of the negative electrode collector, for example, one side or both sides of the negative electrode collector.

The negative electrode active material may be included in the negative electrode active material in an amount of about 60% by weight to 99% by weight, for example, about 75% by weight to 95% by weight.

Since the positive electrode active material has been described above, further descriptions will be omitted.

The negative electrode active material layer may further include a binder and/or a conductive material along with the negative electrode active material.

The binder is used to improve the adhesion with the negative electrode active material layer and the negative electrode collector, thereby improving the performance of the battery, and may include, for example, at least one selected from the group consisting of a polyvinylidene fluoride-hexafluoropropylene copolymer (PVDF-co-HFP), polyvinylidene fluoride (PVDF), polyacrylonitrile, polymethyl methacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluororubber, and substances thereof in which hydrogen is substituted with Li, Na, or Ca, and may also include various copolymers thereof.

The binder may be included in the negative electrode active material layer in an amount of about 0.5% by weight to 10% by weight, for example, about 1% by weight to 5% by weight.

The conductive material may be, without being particularly limited, any material that has conductivity without causing chemical changes in the battery. Examples thereof include graphite such as natural graphite or artificial graphite; carbon black, such as carbon black, acetylene black, Ketjen black, channel black, furnace black, lamp black, and thermal black; conductive fibers such as carbon fiber and metal fiber; conductive tubes such as carbon nanotubes; fluorocarbon; metal powders such as aluminum and nickel powder; conductive whiskers such as zinc oxide and potassium titanate; conductive metal oxides such as titanium oxide; conductive materials such as polyphenylene derivatives.

The conductive material may be included in the negative electrode active material layer in an amount of about 0.5% by weight to 10% by weight, for example, about 1% by weight to 5% by weight.

The thickness of the negative electrode active material layer may be about 10 µm to 200 µm, for example, about 20 µm to 150 µm.

The negative electrode may be manufactured by coating a negative electrode slurry containing a negative electrode active material, a binder, a conductive material, and a solvent for forming a negative electrode slurry on at least one side of the negative electrode collector, followed by drying and rolling.

The solvent for forming the negative electrode slurry may include at least one selected from the group consisting of distilled water, N-methyl-2-pyrrolidone (NMP), ethanol, methanol, and isopropyl alcohol, for example, in terms of facilitating dispersion of the negative electrode active material, the binder, and/or the conductive material. According to one embodiment, the solvent may include distilled water. The solid content of the negative electrode slurry may be about 30% by weight to 80% by weight, for example, about 40% by weight to 70% by weight.

### (3) Separator

The separator may be interposed between the positive electrode and the negative electrode.

**In** addition, the separator that may be used herein may be any porous polymer films commonly used as a separator such as, for example, a porous polymer film made of polyolefin-based polymers such as ethylene homopolymer, propylene homopolymer, ethylene/butene copolymer, ethylene/hexene copolymer, and ethylene/methacrylate copolymer, which may be used alone or laminated therewith. Alternatively, the separator that may be used herein may be any porous non-woven fabrics, for example, non-woven fabrics made of high melting point glass fibers, polyethylene terephthalate fibers, or the like, but not limited thereto. Further, a coated separator containing ceramic components or polymer materials may be used to ensure heat resistance or mechanical strength, and may optionally be used in a single-layer or multi-layer structure.

### (4) Non-aqueous Electrolyte

The non-aqueous electrolyte includes a lithium salt, an organic solvent, and an additive.

### 1) Lithium salt

As for the lithium salt used herein, various lithium salts commonly used in non-aqueous electrolytes for lithium secondary batteries may be used without limitation. For example, the lithium salt includes Li⁺ as a cation, and as an anion, at least one selected from the group consisting of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, B₁₀Cl₁₀⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (FSO₂)₂N⁻, CF₃CF₂(CF₃)₂CO⁻, (CF₃SO₂)₂CH⁻, CH₃SO₃⁻, CF₃(CF₂)₇SO₃⁻, CF₃CO₂⁻, CH₃CO₂⁻, SCN⁻, and (CF₃CF₂SO₂)₂N⁻.

For example, the lithium salt may include at least one selected from the group consisting of LiCl, LiBr, LiI, LiBF₄, LiClO₄, LiAlO₄, LiAlCl₄, LiPF₆, LiSbF₆, LiAsF₆, LiB₁₀Cl₁₀, LiBOB (LiB(C₂O₄)₂), LiCF₃SO₃, LiFSI (LiN(SO₂F)₂), LiCH₃SO₃, LiCF₃CO₂, LiCH₃CO₂, and LiBETI (LiN(SO₂CF₂CF₃)₂). For example, the lithium salt may include at least one selected from the group consisting of LiBF₄, LiClO₄, LiPF₆, LiBOB (LiB(C₂O₄)₂), LiCF₃SO₃, LiTFSI (LiN(SO₂CF₃)₂), LiFSI ((LiN(SO₂F)₂), and LiBETI (LiN(SO₂CF₂CF₃)₂)

The lithium salt may be included in the non-aqueous electrolyte at a concentration of about 0.5 M to 5 M, for example, about 0.8 M to 4 M, or about 0.8 M to 2.0 M. When the concentration of the lithium salt satisfies the above range, the lithium ion yield (Li⁺ transference number) and the degree of dissociation of lithium ions are improved, thereby improving the output characteristics of the battery.

### 2) Organic solvent

The organic solvent is a non-aqueous solvent commonly used in lithium secondary batteries, and is not particularly limited as long as the organic solvent can minimize decomposition due to oxidation reactions during the charging and discharging process of the secondary battery.

For example, the organic solvent may include at least one selected from the group consisting of cyclic carbonate-based organic solvents, linear carbonate-based organic solvents, linear ester-based organic solvents, and cyclic ester-based organic solvents.

For example, the organic solvent may include a cyclic carbonate-based organic solvent, a linear carbonate-based organic solvent, or a mixture thereof.

The cyclic carbonate-based organic solvent is a high-viscosity organic solvent that has a high dielectric constant and can easily dissociate the lithium salt in the electrolyte, and may include, for example, at least one organic solvent selected from the group consisting of ethylene carbonate (EC), fluoroethylene carbonate (FEC), and propylene carbonate (PC), 1,2-butylene carbonate, 2,3-butylene carbonate, 1,2-pentylene carbonate, 2,3-pentylene carbonate, and vinylene carbonate. Alternatively, the cyclic carbonate-based organic solvent may include at least one selected from the group consisting of ethylene carbonate (EC) and fluoroethylene carbonate (FEC). According to an embodiment, the cyclic carbonate-based organic solvent may include ethylene carbonate (EC).

Further, the linear carbonate-based organic solvent is an organic solvent having a low viscosity and low dielectric constant, and may include, for example, at least one selected from the group consisting of dimethyl carbonate (DMC), diethyl carbonate (DEC), dipropyl carbonate, ethyl methyl carbonate (EMC), methyl propyl carbonate, and ethyl propyl carbonate. Alternatively, the linear carbonate-based organic solvent may include at least one selected from the group consisting of ethyl methyl carbonate (EMC) and diethyl carbonate (DEC). According to an embodiment, the linear carbonate-based organic solvent may include ethyl methyl carbonate (EMC).

The organic solvent may include a mixture of the cyclic carbonate-based organic solvent and the linear carbonate-based organic solvent. In this case, the cyclic carbonate-based organic solvent and the linear carbonate-based organic solvent may be mixed in a volume ratio of about 5:95 to 40:60, for example, 8:92 to 35:65, or 10:90 to 25:75. When the mixing ratio of the cyclic carbonate-based organic solvent and the linear carbonate-based organic solvent satisfies the above-mentioned range, high dielectric constant and low viscosity characteristics may be simultaneously satisfied, and excellent ionic conductivity characteristics may be implemented.

Further, in order to prepare an electrolyte having high ionic conductivity, the organic solvent may include at least one carbonate-based organic solvent selected from the group consisting of the cyclic carbonate-based organic solvent and the linear carbonate-based organic solvent, and additionally, at least one ester-based organic solvent selected from the group consisting of a linear ester-based organic solvent and a cyclic ester-based organic solvent.

Examples of the linear ester-based organic solvent include at least one selected from the group consisting of methyl acetate, ethyl acetate, propyl acetate, methyl propionate, ethyl propionate, propyl propionate, and butyl propionate.

Further, examples of the cyclic ester-based organic solvent include at least one selected from the group consisting of γ-butyrolactone, γ-valerolactone, γ-caprolactone, σ-valerolactone, and ε-caprolactone.

Meanwhile, the organic solvent may further include, without limitation, an organic solvent commonly used in non-aqueous electrolytes as needed. For example, the organic solvent may additionally include at least one organic solvent selected from the group consisting of an ether-based organic solvent, a glyme-based solvent, and a nitrile-based organic solvent.

The ether-based solvent used herein may be any one selected from the group consisting of dimethyl ether, diethyl ether, dipropyl ether, methyl ethyl ether, methyl propyl ether, ethyl propyl ether, 1,3-dioxolane (DOL), and 2,2-bis (trifluoromethyl )-1,3-dioxolane (TFDOL), or a mixture of two or more thereof, but is not limited thereto.

The glyme-based solvent has a high dielectric constant and low surface tension compared to the linear carbonate-based organic solvent, and low reactivity with metal, and may include at least one selected from the group consisting of dimethoxyethane (glime, DME), diethoxyethane, diglyme, triglyme, and tetra-glyme (TEGDME), but is not limited thereto.

The nitrile-based solvent may include at least one selected from the group consisting of acetonitrile, propionitrile, butyronitrile, valeronitrile, caprylonitrile, heptanenitrile, cyclopentane carbonitrile, cyclohexane carbonitrile, 2-fluorobenzonitrile, and 4-fluorobenzonitrile, difluorobenzonitrile, trifluorobenzonitrile, phenylacetonitrile, 2-fluorophenylacetonitrile, and 4-fluorophenylacetonitrile, but is not limited thereto.

### 3) Additive

The non-aqueous electrolyte includes an additive.

The additive includes a first additive and a second additive.

The first additive is a phosphate-based additive having a silyl group, and examples thereof include tris(trimethylsilyl) phosphate (TMSPa).

The tris(trimethylsilyl) phosphate is able to be decomposed to form P-O radicals, which may be used to form a P-O-based film on the positive electrode. The tris(trimethylsilyl) phosphate is also able to function as a HF scavenger to remove decomposition products (PF₅, HF, etc.) of lithium salts generated during the charging and discharging process of the lithium secondary battery.

Meanwhile, tris(trimethylsilyl) phosphate is applied as the first additive, but not limited thereto. For example, any other material may be applied as long as the material is able to be decomposed to form P-O radicals, which may be used to form a P-O-based film on the positive electrode, or the material is able to function as a HF scavenger to remove decomposition products (PF₅, HF, etc.) of lithium salts generated during the charging and discharging process of the lithium secondary battery.

Meanwhile, since the P-O radicals generated from the tris(trimethylsilyl) phosphate have a relatively fast reaction rate, a single molecule type film is formed rather than a polymer-type film through a chain reaction. Therefore, when tris(trimethylsilyl) phosphate is used alone, there is a problem in that film formation with sufficient coverage on the positive electrode cannot be expected. However, the present disclosure uses the first additive and the second additive in combination, and as a result, a film with excellent lithium transfer characteristics, excellent coverage, and improved durability may be formed on the positive electrode, and the lifespan performance and high temperature storage performance of the lithium secondary battery may be improved.

The first additive may be included in the non-aqueous electrolyte in an amount of about 0.01% by weight to 10% by weight, for example, about 0.05% by weight to 7% by weight, about 0.1% by weight to 5% by weight, or about 1% by weight to 4% by weight. When the first additive is used in the above-mentioned content range, the above-described effects of improving lifespan performance and high-temperature storage performance may be achieved, while avoiding the possibility of increasing resistance when added in excess.

The second additive may include a compound represented by Formula 1: 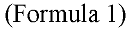 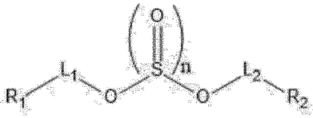 in Formula 1, n is 1 or 2; L₁ and L₂ are each independently a direct bond or a substituted or unsubstituted alkylene group having 1 to 6 carbon atoms; R₁ and R₂ are each independently selected from a substituent represented by Formula 2: 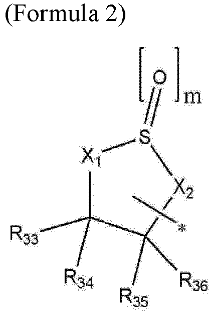 in Formula 2, m is 1 or 2, X₁ and X₂ are each independently -O- or -C(R₃₁)(R₃₂)-, provided that at least one of X₁ and X₂ is -O-; R₃₁ to R₃₆ are each independently hydrogen, an alkyl group having 1 to 6 carbon atoms, -C(=O)-R₄, or -R₅-O-C(=O)-R₆, R₄ and R₆ are each independently a substituted or unsubstituted alkyl group having 1 to 6 carbon atoms, an alkenyl group having 2 to 20 carbon atoms, an alkynyl group having 2 to 20 carbon atoms, or a substituted or unsubstituted aryl group having 6 to 20 carbon atoms; R₅ is a substituted or unsubstituted alkylene group having 1 to 6 carbon atoms; each substituent of L₁, L₂, R₄, R₅, and R₆ is at least one independently selected from the group consisting of deuterium, -F, -Cl, -Br, -I, -CN, -NO₂, and -SO₃; * is a binding position to L₁ or L₂; when L₁ and L₂ are both direct bonds, then R₁ and R₂ are not simultaneously CS-7 below; and when L₁ and L₂ are both methylene groups, and n is 2, then R₁ and R₂ are not simultaneously CS-2 below:

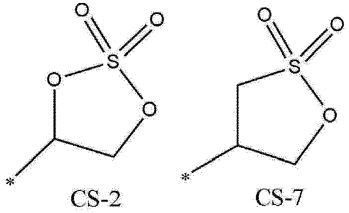

The compound represented by Formula 1 has a sulfur oxide structure in the center and a cyclic sulfur oxide structure at both ends. By adopting such a chemical structure, the compound may induce the stable formation of anions when applied as an additive for the non-aqueous electrolyte, and may further ensure that a stable solid electrolyte interphase (SEI) layer is formed.

Meanwhile, the compound represented by Formula 1 forms a film on the positive electrode through a ring-opening reaction of the cyclic sulfur oxide, but has a problem of low reaction participation rate due to steric hinderance. Therefore, when the compound represented by Formula 1 is used alone, it is difficult to form the desired positive electrode film due to the low reaction participation rate. However, in the present disclosure, as the first additive and the second additive are used together, P-O radicals are formed from the first additive, and the P-O radicals may promote the ring-opening reaction of the compound represented by Formula 1, resulting in the formation of an oxygen (O)-rich positive electrode film based on sulfur (S) and phosphorus (P), thereby implementing a lithium secondary battery having excellent lithium transfer characteristics together with excellent lifespan performance and storage performance. Further, when the first additive and the second additive are used in combination, a film having an excellent coverage and improved durability may be formed on the positive electrode due to the formation of P-O radicals by the first additive and the acceleration of the ring-opening reaction of the second additive by the radicals.

Meanwhile, in addition to the above-described second additive, any other additive may be applied as the second additive, for example, in combination with the first additive, as long as the additive can facilitate, for example, ring-opening reaction by radicals.

The effect of improving the lifespan performance and the storage performance due to the organic action of the first and second additives is more noticeable when used at high voltage, and is especially effective when the lithium transition metal oxide represented by Formula X described above is used as the positive electrode active material.

For example, in the compound represented by Formula 1, R₁ and R₂ may be each independently selected from the group consisting of CS-1 to CS-15:

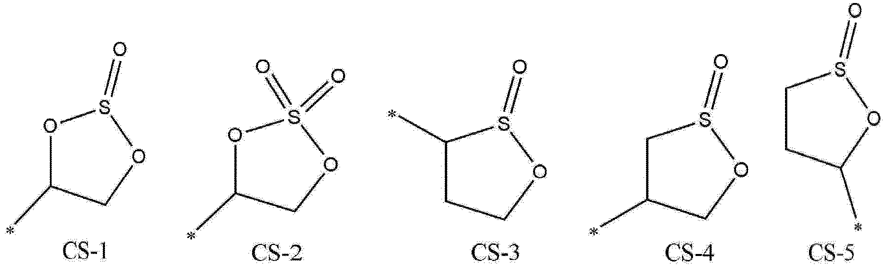

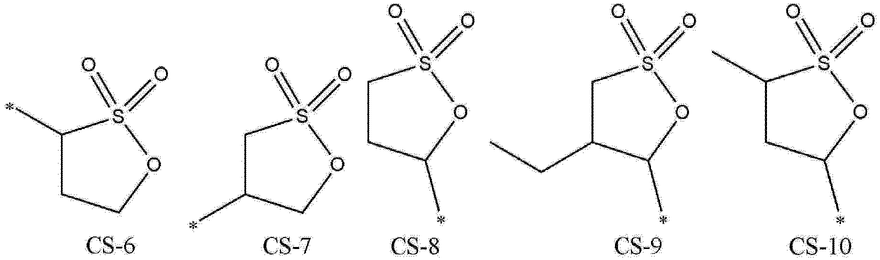

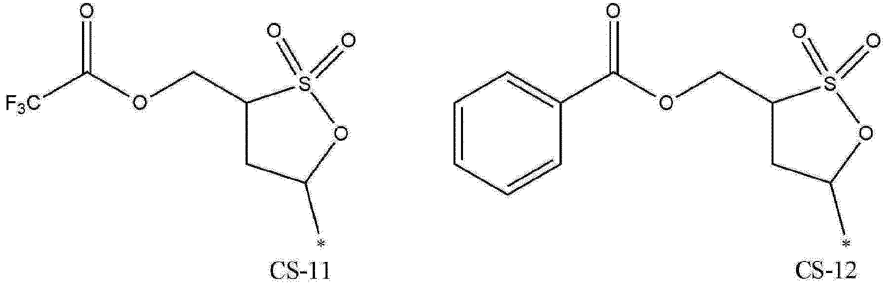

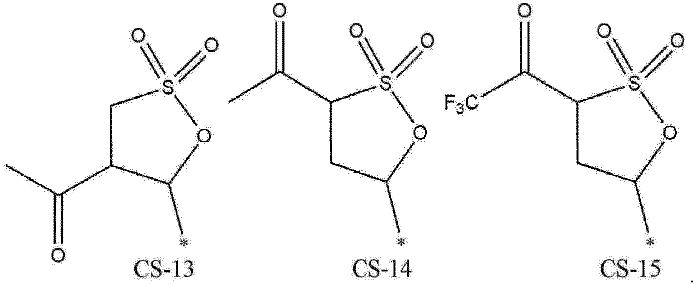

The substituent structures CS-1 to CS-15 listed above are preferred examples of R₁ and R₂ of Formula 1, and when the substituents of CS-1 to CS-15 are applied as R₁ and R₂ of Formula 1, the overall compound has good structural stability and may function well as additives for the non-aqueous electrolyte. For example, R₁ and R₂ may be each independently selected from the group consisting of CS-1, CS-2, CS-5, CS-8, CS-10, and CS-11, which may be preferred in terms of structural stability and ease of synthesis.

Meanwhile, in the compound represented by Formula 1 of the present disclosure, when L₁ and L₂ are both direct bonds and R₁ and R₂ are CS-7, or when L₁ and L₂ are both methylene groups, n is 2, and R₁ and R₂ are simultaneously CS-2, then the compound itself may be easily decomposed due to low structural stability, and thus the synthesis of the compound itself may be difficult. Specifically, compounds that meet the above conditions have a disadvantage that the ring-shaped R₁ and R₂ structures are easily degraded during the synthesis process, and even when the compound is finally synthesized, it is easily degraded during storage, and the synthesis yield is significantly low. Thus, the present disclosure excludes compounds in which L₁ and L₂ are both direct bonds and R₁ and R₂ are CS-7, and compounds in which n is 2 and R₁ and R₂ are simultaneously CS-2.

In the compound represented by Formula 1, L₁ and L₂ may be each independently a direct bond, a methylene group, or an ethylene group, and in particular, may be methylene group according to an embodiment. When L₁ and L₂ are methylene groups, the synthesis of the compound is facilitated and the degradation of the compound after synthesis may be inhibited.

For example, the compound represented by Formula 1 may be any one selected from the group consisting of Compounds A to R:

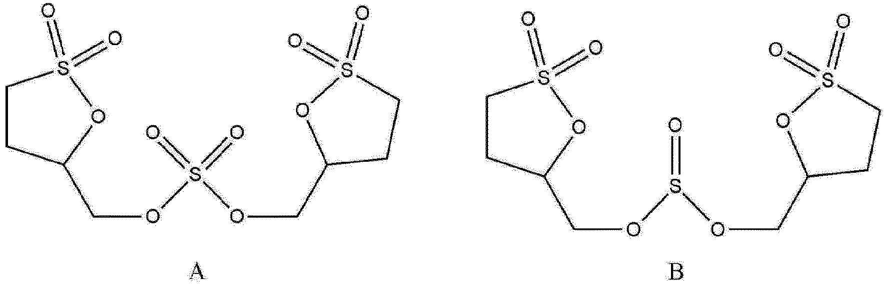

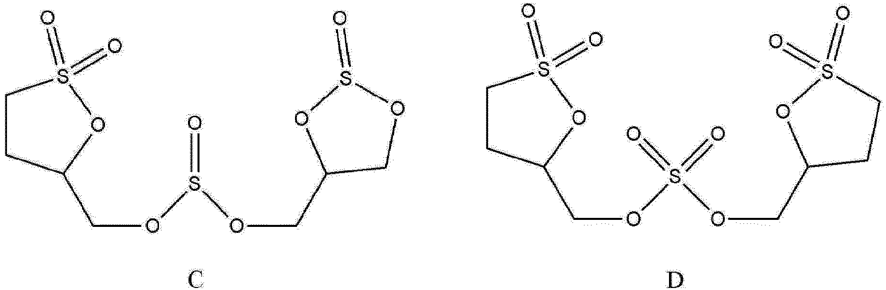

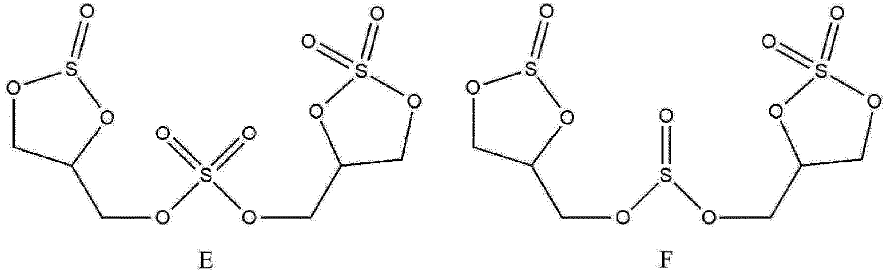

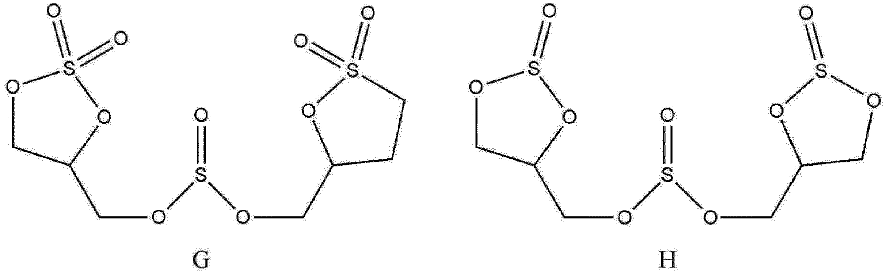

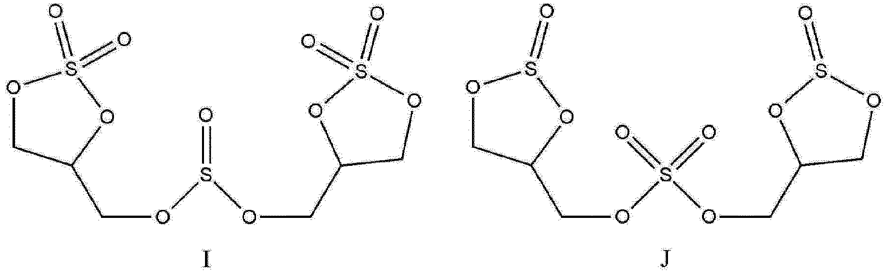

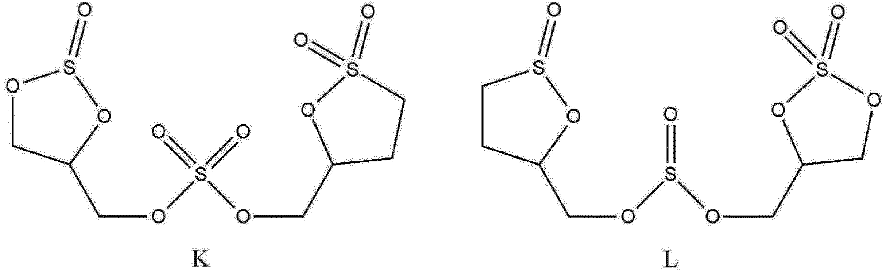

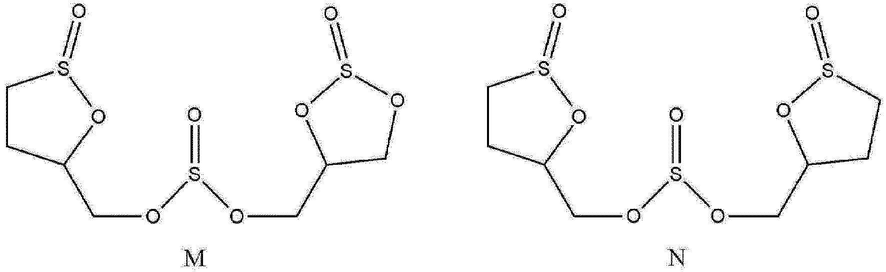

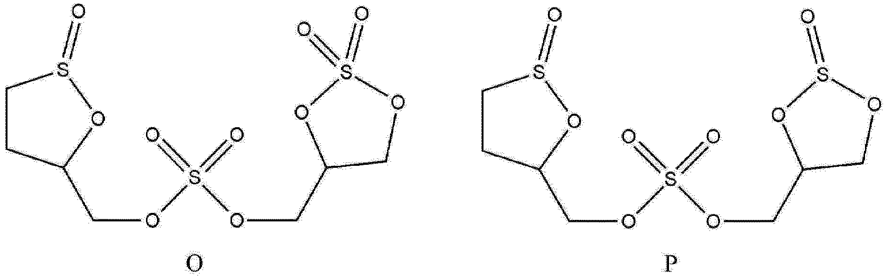

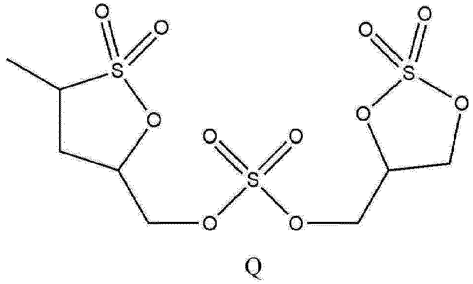

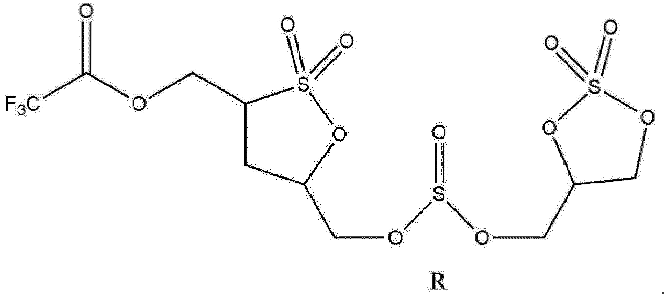

When the compound represented by Formula 1 has the structure described above, the compound has the advantage of being able to form a stable SEI layer with low resistance even with a small amount compared to commonly used additives.

The compound represented by Formula 1 may be included in the non-aqueous electrolyte in an amount of about 0.01% by weight to 10% by weight, for example, about 0.05% by weight to 7% by weight, about 0.1% by weight to 5% by weight, or about 1% by weight to 4% by weight. Within the above-mentioned range, it is desirable in that the effect of improving the lifespan performance and the storage performance of the secondary battery described above may be achieved while preventing an increase in resistance due to excessive use of additives.

Meanwhile, in addition to the above-described second additive, any other type of compound may be applied as the second additive as long as the compound can implement similar functions and effects.

The weight ratio of the first additive and the second additive may be about 1:99 to 99: 1, for example, about 30:70 to 70:30, or 40:60 to 60:40, and when the weight ratio is as described above, the effect of using the combination of the first additive and the second additive is harmonized, and as a result, the effect of improving the high temperature lifespan performance and the high temperature storage performance of the lithium secondary battery is more preferably expressed.

The additive may further include an additional additive in combination with the first additive; or the first additive and the second additive. The additional additive may be included in the non-aqueous electrolyte to prevent the non-aqueous electrolyte from decomposing and causing negative electrode collapse in high power environments, or for low temperature high rate discharge characteristics, high temperature stability, overcharge protection, and battery expansion inhibition at high temperatures.

For example, the additional additive may include at least one selected from the group consisting of vinylene carbonate, vinyl ethylene carbonate, fluoroethylene carbonate, propane sultone, propene sultone, 1,4-butane sultone, succinonitrile, adiponitrile, ethylene sulfate, lithium difluoro phosphate (LiDFP), lithium tetrafluoroborate (LiBF₄), lithium difluoro(oxalato)borate (LiODFB), and tris(trimethylsilyl) Phosphite (TMSPi).

The additional additive may be contained in an amount of about 0.1% by weight to 15% by weight in the non-aqueous electrolyte.

The driving voltage of the lithium secondary battery of the present disclosure may be about 4.35 V or more, for example, about 4.4 V or more. The lithium secondary battery of the present disclosure may achieve excellent energy density and improved lifespan performance and storage performance at high driving voltage by the combination of the above-described positive electrode and non-aqueous electrolyte.

The shape of the lithium secondary battery of the present disclosure is not particularly limited, but may be a cylindrical shape using a can, a square shape, a pouch shape, or a coin shape.

Hereinafter, the present disclosure will be described through Examples. However, the following examples are intended to illustrate the invention and are not intended to limit the scope of the present disclosure. It will be obvious to those skilled in the art that various changes and modifications may be made within the scope of the present description and the technical idea, and that such changes and modifications fall within the scope of the appended claims.

### Examples and Comparative Examples

### Example 1

### (Preparation of Non-aqueous Electrolyte)

A mixture of ethylene carbonate (EC) and ethyl methyl carbonate (EMC) in a volume ratio of 20:80 was used as an organic solvent.

A non-aqueous electrolyte was prepared by adding LiPF₆ as a lithium salt, tris(trimethylsilyl) phosphate (TMSPa) as a first additive, and Compound A as a second additive to the organic solvent.

The LiPF₆ was contained in the non-aqueous electrolyte at a molar concentration of 1.2 M.

The first additive was contained in the non-aqueous electrolyte in an amount of 0.1% by weight, and the second additive was contained in the non-aqueous electrolyte in an amount 0.1% by weight.

### (Preparation of Lithium Secondary Battery)

A positive electrode active material (Li[Ni_{0.60}Co_{0.05}Mn_{0.35}]O₂), a conductive material (carbon nanotubes), and a binder (polyvinylidene fluoride) were added to a solvent N-methyl-2-pyrrolidone (NMP) in a weight ratio of 97.74:0.70:1.56 to prepare a positive electrode slurry (75.5% by weight of solid). The positive electrode slurry was applied to one side of a positive electrode collector (Al thin film) having a thickness of 15 µm, dried, and roll pressed to prepare a positive electrode. The positive electrode active material was in a monoparticle or pseudo-monoparticle form.

A negative electrode active material (natural graphite), a conductive material (carbon black), and a binder (styrene-butadiene rubber and carboxymethyl cellulose) were added to distilled water serving as a solvent in a weight ratio of 96.15:1.55:2.30 to prepare a negative electrode slurry (26% by weight of solid). The negative electrode slurry was applied to one side of a negative electrode collector (Cu thin film) having a thickness of 15 µm, dried, and roll pressed to prepare a negative electrode.

A separator made of porous polyethylene film was interposed between the prepared positive and negative electrodes in a dry room, and then the prepared non-aqueous electrolyte was injected to prepare a secondary battery.

### Example 2

A lithium secondary battery was prepared in the same manner as in Example 1, except that the second additive was added to the non-aqueous electrolyte in a content of 5% by weight instead of 0.1% by weight in Example 1.

### Example 3

A lithium secondary battery was prepared in the same manner as in Example 1, except that the first additive was added to the non-aqueous electrolyte in a content of 3% by weight instead of 0.1% by weight in Example 1, and the second additive was added to the non-aqueous electrolyte in a content of 3% by weight instead of 0.1% by weight in Example 1.

### Example 4

A lithium secondary battery was prepared in the same manner as in Example 1, except that the first additive was added to the non-aqueous electrolyte in a content of 5% by weight instead of 0.1% by weight in Example 1.

### Example 5

A lithium secondary battery was prepared in the same manner as in Example 1, except that the first additive was added to the non-aqueous electrolyte in a content of 5% by weight instead of 0.1% by weight in Example 1, and the second additive was added to the non-aqueous electrolyte in a content of 5% by weight instead of 0.1% by weight in Example 1.

### Example 6

A lithium secondary battery was prepared in the same way as in Example 3, except that Compound F was contained in the non-aqueous electrolyte in a content of 3% by weight instead of Compound A in Example 1 as the second additive.

### Example 7

A lithium secondary battery was prepared in the same way as in Example 3, except that Compound J was contained in the non-aqueous electrolyte in a content of 3% by weight instead of Compound A in Example 1 as the second additive.

### Comparative Example 1

A lithium secondary battery was prepared in the same manner as in Example 1, except that the second additive was not added to the non-aqueous electrolyte.

### Comparative Example 2

A lithium secondary battery was prepared in the same manner as in Example 1, except that the first additive was added to the non-aqueous electrolyte in a content of 5% by weight instead of 0.1% by weight in Example 1, and the second additive was not added to the non-aqueous electrolyte.

### Comparative Example 3

A lithium secondary battery was prepared in the same manner as in Example 1, except that the first additive was not added to the non-aqueous electrolyte.

### Comparative Example 4

A lithium secondary battery was prepared in the same manner as in Example 1, except that the first additive was not added to the non-aqueous electrolyte, and the second additive was added to the non-aqueous electrolyte in a content of 5% by weight instead of 0.1% by weight.

### Comparative Example 5

A lithium secondary battery was prepared in the same way as in Example 3, except that the comparative compound was contained in the non-aqueous electrolyte in a content of 3% by weight instead of Compound A in Example 1 as the second additive.

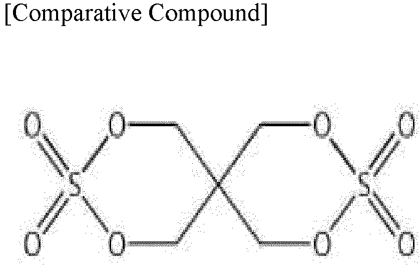

**Table 1**

| | Non-aqueous electrolyte | | | | |
|---|---|---|---|---|---|
| | Lithium salt (LiPF₆) | Organic solvent | Additive | | |
| | Molar concentration (M, based on non-aqueous electrolyte) | | First additive | | Second additive |
| | | | Type | Content (wt%, based on non-aqueous electrolyte) | Content (wt%, based on non-aqueous electrolyte) |
| Example 1 | 1.2 | EC:EMC (20:80 by vol.) | Compound A | 0.1 | 0.1 |
| Example 2 | 1.2 | EC:EMC (20:80 by vol.) | Compound A | 0.1 | 5 |
| Example 3 | 1.2 | EC:EMC (20:80 by vol.) | Compound A | 3 | 3 |
| Example 4 | 1.2 | EC:EMC (20:80 by vol.) | Compound A | 5 | 0.1 |
| Example 5 | 1.2 | EC:EMC (20:80 by vol.) | Compound A | 5 | 5 |
| Example 6 | 1.2 | EC:EMC (20:80 by vol.) | Compound F | 3 | 3 |
| Example 7 | 1.2 | EC:EMC (20:80 by vol.) | Compound J | 3 | 3 |
| Comparative Example 1 | 1.2 | EC:EMC (20:80 by vol.) | Compound A | 0.1 | - |
| Comparative Example 2 | 1.2 | EC:EMC (20:80 by vol.) | Compound A | 5 | - |
| Comparative Example 3 | 1.2 | EC:EMC (20:80 by vol.) | - | - | 0.1 |
| Comparative Example 4 | 1.2 | EC:EMC (20:80 by vol.) | - | - | 5 |
| Comparative Example 5 | 1.2 | EC:EMC (20:80 by vol.) | Comparative Compound | 3 | 3 |

### Experimental Example

### Experimental Example 1: Evaluation of high temperature cycle performance

Each of the lithium secondary batteries of Examples 1 to 7 and Comparative Examples 1 to 5 prepared above was charged and discharged for 300 cycles, each of which includes charging to 4.4 V and 0.05 C under conditions of constant current/constant voltage (CC/CV) and 0.33 C at 45 °C, and discharging to 2.5 V under conditions of constant current (CC) and 0.33 C, using an electrochemical charge and discharge device.

### (1) Capacity retention rate

The capacity retention rate was calculated using the equation below, and the results were shown in Table 2 below. Capacity retention rate (%) = {(discharge capacity after 300 cycles)/(discharge capacity after 1 cycle)} × 100

### (2) Resistance increase rate

After one cycle of charge and discharge, the discharge capacity after one cycle was measured using an electrochemical charge and discharge device, a state of charge (SOC) was adjusted to 50%, and a pulse of 2.5 C was applied for 10 seconds to calculate the initial resistance through the difference between the voltage before applying the pulse and the voltage after applying the pulse.

After 300 cycles of charging and discharging, the resistance after 300 cycles was calculated in the same manner as above, the resistance increase rate was calculated using the equation below, and the results are shown in Table 2 below. Resistance increase rate (%) = (resistance after 300 cycles - initial resistance)/initial resistance × 100

**Table 2**

| | Capacity retention rate (%) | Resistance increase rate (%) |
|---|---|---|
| Example 1 | 96 | 10 |
| Example 2 | 95 | 9 |
| Example 3 | 96 | 8 |
| Example 4 | 96 | 11 |
| Example 5 | 95 | 10 |
| Example 6 | 96 | 8 |
| Example 7 | 97 | 9 |
| Comparative Example 1 | 75 | 27 |
| Comparative Example 2 | 81 | 26 |
| Comparative Example 3 | 70 | 25 |
| Comparative Example 4 | 82 | 18 |
| Comparative Example 5 | 80 | 34 |

Referring to Table 2, it can be seen that the lithium secondary battery of Examples 1 to 7, which includes a combination of a positive electrode including a lithium transition metal oxide represented by Formula X and a non-aqueous electrolyte of the present disclosure including a first additive and a second additive as additives, has a higher capacity retention rate and a lower resistance increase rate during high-temperature cycle charging and discharging at a high voltage compared to the case of Comparative Examples 1 to 5 to which the present disclosure is not applied.

### Experimental Example 2: Evaluation of high temperature storage performance

Each of the lithium secondary batteries of Examples 1 to 7 and Comparative Examples 1 to 5 prepared above was subjected to initial charge and discharge, which included charging to 4.4 V and 0.05 C under conditions of CC/CV and 0.33 C at 25 °C and then discharging to 2.5 V under conditions of CC and 0.33 C, using an electrochemical charge and discharge device. Then, the lithium secondary battery was charged to 4.4 V and 0.05 C under conditions of CC/CV, 0.33 C at 25 °C, and then stored at 60 °C for 12 weeks.

### (1) Capacity retention rate

After storage for 12 weeks, the lithium secondary battery was charged to 4.4 V, 0.05 C under conditions of CC/CV and 0.33 C at 25 °C, and discharged to 2.5 V under conditions of CC and 0.33 C, using an electrochemical charge and discharge device, to measure the capacity during discharge.

The capacity retention rate was calculated according to the equation below, and the results were shown in Table 3 below. Capacity maintenance rate (%) = (discharge capacity after 12 weeks of storage/initial discharge capacity) × 100

### (2) Resistance increase rate

After the initial charge and discharge, the capacity was checked at room temperature. After that, the lithium secondary battery was charged with SOC 50% based on the discharge capacity, and discharged at 2.5 C current for 10 seconds. Then, the resistance was measured using the difference in voltage drop at this time, which was used as the initial resistance. After 12 weeks of storage at 60°C, the resistance was measured in the same manner, which used as the final resistance. Then, the resistance increase rate was calculated using the following equation. The results are shown in Table 3 below. Resistance increase rate (%) = (final resistance - initial resistance)/initial resistance )× 100

**Table 3**

| | Capacity retention rate (%) | Resistance increase rate (%) |
|---|---|---|
| Example 1 | 95 | 9 |
| Example 2 | 95 | 8 |
| Example 3 | 96 | 6 |
| Example 4 | 94 | 7 |
| Example 5 | 95 | 8 |
| Example 6 | 97 | 7 |
| Example 7 | 96 | 6 |
| Comparative Example 1 | 85 | 24 |
| Comparative Example 2 | 86 | 22 |
| Comparative Example 3 | 75 | 19 |
| Comparative Example 4 | 72 | 16 |
| Comparative Example 5 | 76 | 28 |

Referring to Table 3, it can be seen that the lithium secondary battery of Examples 1 to 7, which includes a combination of a positive electrode including a lithium transition metal oxide represented by Formula X and a non-aqueous electrolyte of the present disclosure including a first additive and a second additive as additives, has a higher capacity retention rate and a lower resistance increase rate during high temperature storage compared to the case of Comparative Examples 1 to 5 to which the present disclosure is not applied.

### Reference Example A: Case of using Li[Ni_{0.8}Co_{0.1}Mn_{0.1}]O₂ as the positive electrode active material

### Reference Example 1A

### (1) Preparation of Non-aqueous Electrolyte

A mixture of ethylene carbonate (EC) and ethyl methyl carbonate (EMC) in a volume ratio of 20:80 was used as an organic solvent.

A non-aqueous electrolyte was prepared by adding LiPF₆ as a lithium salt, tris(trimethylsilyl) phosphate (TMSPa) as a first additive, and Compound A as a second additive to the organic solvent.

The LiPF₆ was contained in the non-aqueous electrolyte at a molar concentration of 1.2 M.

The first additive was contained in the non-aqueous electrolyte in an amount of 5% by weight, and the second additive was contained in the non-aqueous electrolyte in an amount of 5% by weight.

### (2) Preparation of Lithium Secondary Battery

A positive electrode active material (Li[Ni_{0.8}Co_{0.1}Mn_{0.1}]O₂), a conductive material (carbon nanotubes), and a binder (PVDF) were added to a solvent N-methyl-2-pyrrolidone (NMP) in a weight ratio of 96.78:1.20:2.02 to prepare a positive electrode mixture slurry (75.5% by weight of solid). The positive electrode mixture slurry was applied to one side of a positive electrode collector (Al thin film) having a thickness of 15 µm, dried, and roll pressed to prepare a positive electrode.

A negative electrode active material (natural graphite), a conductive material (carbon black), and a binder (styrene-butadiene rubber and carboxymethyl cellulose) were added to distilled water serving as a solvent in a weight ratio of 96.15:0.50:3.35 to prepare a negative electrode mixture slurry (26% by weight of solid). The positive electrode mixture slurry was applied to one side of a negative electrode collector (Cu thin film) having a thickness of 15 µm, dried, and roll pressed to prepare a negative electrode.

A separator made of porous polyethylene film was interposed between the prepared positive and negative electrodes in a dry room, and then the prepared non-aqueous electrolyte was injected to prepare a secondary battery.

### Reference Example 2A

A lithium secondary battery was prepared in the same manner as Reference Example 1A, except that the second additive was not added to the non-aqueous electrolyte.

### Reference Example 3A

A lithium secondary battery was prepared in the same manner as Reference Example 1A, except that the first additive was not added to the non-aqueous electrolyte.

### Reference Experiment Example A-1

Each of the lithium secondary batteries of Reference Examples 1A to 3A prepared above was charged and discharged for 300 cycles, each of which includes charging to 4.2 V and 1/40 C under conditions of constant current/constant voltage (CC/CV) and 0.33 C at 45 °C, and discharging to 2.5 V under conditions of constant current (CC) and 0.33 C, using an electrochemical charge and discharge device.

### (1) Capacity retention rate

The capacity retention rate was calculated using the equation below, and the results were shown in Table 4 below. Capacity retention rate (%) = {(discharge capacity after 300 cycles)/(discharge capacity after 1 cycle)} × 100

### (2) Resistance increase rate

After one cycle of charge and discharge, the discharge capacity after one cycle was measured using an electrochemical charge and discharge device, SOC was adjusted to SOC of 50%, and a pulse of 2.5 C was applied for 10 seconds to calculate the initial resistance through the difference between the voltage before applying the pulse and the voltage after applying the pulse.

After 300 cycles of charging and discharging, the resistance after 300 cycles was calculated in the same manner as above, the resistance increase rate was calculated using the equation below, and the results are shown in Table 4 below. Resistance increase rate (%) = (resistance after 300 cycles - initial resistance)/initial resistance × 100

### Reference Experiment Example A-2

Each of the lithium secondary batteries of Reference Examples 1A to 3A prepared above was subjected to initial charge and discharge, which included charging to 4.2 V and 1/40 C under conditions of CC/CV and 0.33 C at 25 °C and then discharging to 2.5 V under conditions of CC and 0.33 C. Then, the lithium secondary battery was charged to 4.2 V and 1/40 C under conditions of CC/CV, 0.33 C at 25 °C, and then stored at 60 °C for 12 weeks.

### (1) Capacity retention rate

After storage for 12 weeks, the lithium secondary battery was charged to 4.2 V, 1/40 C under conditions of CC/CV and 0.33 C at 25 °C, and discharged to 2.5 V under conditions of 0.33 C to measure the capacity during discharge.

The capacity retention rate was calculated according to the equation below, and the results were shown in Table 4 below. Capacity maintenance rate (%) = (discharge capacity after 12 weeks of storage/initial discharge capacity) × 100

### (2) Resistance increase rate

After the initial charge and discharge, the capacity was checked at room temperature. After that, the lithium secondary battery was charged with SOC 50% based on the discharge capacity, and discharged at 2.5 C current for 10 seconds. Then, the resistance was measured using the difference in voltage drop at this time, which was used as the initial resistance. After 12 weeks of storage at 60 °C, the resistance was measured in the same manner, which used as the final resistance. Then, the resistance increase rate was calculated using the following equation. The results are shown in Table 4 below. Resistance increase rate (%) = (final resistance - initial resistance)/initial resistance )× 100

**Table 4**

| | Reference Experiment Example A-1 | | Reference Experiment Example A-2 | |
|---|---|---|---|---|
| | Capacity retention rate (%) | Resistance increase rate (%) | Capacity retention rate (%) | Resistance increase rate (%) |
| Reference Example 1A | 86 | 18 | 89 | 13 |
| Reference Example 2A | 88 | 20 | 90 | 16 |
| Reference Example 3A | 86 | 19 | 90 | 14 |

Referring to Table 4, it can be seen that the lithium secondary battery of Reference Example 1A had a relatively small improvement in effect compared to Reference Examples 2A and 3A, even though the first additive and the second additive are used as the additives for the non-aqueous electrolyte additives. For example, in the case of Reference Examples 1A to 3A where high-nickel lithium transition metal oxide (Li[Ni_{0.8}Co_{0.1}Mn_{0.1}]O₂) was used as the positive electrode active material, the effect was not improved at all even when the first additive and the second additive were used in combination. Rather, Reference Example 1A has capacity retention rate during cycle charge/discharge or high temperature storage that is equal or less compared to Reference Examples 2A and 3A.

### Reference Example B: Case of using Li[Ni_{0.6}Co_{0.2}Mn_{0.2}]O₂ as the positive electrode active material

### Reference Example 1B

### (1) Preparation of Non-aqueous Electrolyte

A mixture of ethylene carbonate (EC) and ethyl methyl carbonate (EMC) in a volume ratio of 20:80 was used as an organic solvent.

A non-aqueous electrolyte was prepared by adding LiPF₆ as a lithium salt, tris(trimethylsilyl) phosphate (TMSPa) as a first additive, and Compound A as a second additive to the organic solvent.

The LiPF₆ was contained in the non-aqueous electrolyte at a molar concentration of 1.2 M.

The first additive was contained in the non-aqueous electrolyte in an amount of 5% by weight, and the second additive was contained in the non-aqueous electrolyte in an amount of 5% by weight.

### (2) Preparation of Lithium Secondary Battery

A positive electrode active material (Li[Ni_{0.6}C_{0.2}Mn_{0.2}]O₂), a conductive material (carbon nanotubes), and a binder (PVDF) were added to a solvent N-methyl-2-pyrrolidone (NMP) in a weight ratio of 97.74:0.70:1.56 to prepare a positive electrode mixture slurry (75.5% by weight of solid). The positive electrode mixture slurry was applied to one side of a positive electrode collector (Al thin film) having a thickness of 15 µm, dried, and roll pressed to prepare a positive electrode.

A negative electrode active material (natural graphite), a conductive material (carbon black), and a binder (styrene-butadiene rubber and carboxymethyl cellulose) were added to distilled water serving as a solvent in a weight ratio of 96.15:1.55:2.30 to prepare a negative electrode mixture slurry (26% by weight of solid). The positive electrode mixture slurry was applied to one side of a negative electrode collector (Cu thin film) having a thickness of 15 µm, dried, and roll pressed to prepare a negative electrode.

A separator made of porous polyethylene film was interposed between the prepared positive and negative electrodes in a dry room, and then the prepared non-aqueous electrolyte was injected to prepare a secondary battery.

### Reference Example 2B

A lithium secondary battery was prepared in the same manner as Reference Example 1B, except that the second additive was not added to the non-aqueous electrolyte.

### Reference Example 3B

A lithium secondary battery was prepared in the same manner as Reference Example 1B, except that the first additive was not added to the non-aqueous electrolyte.

### Reference Experiment Example B-1

Each of the lithium secondary batteries of Reference Examples 1B to 3B prepared above was charged and discharged for 300 cycles, each of which includes charging to 4.4 V and 0.05 C under conditions of constant current/constant voltage (CC/CV) and 0.33 C at 45 °C, and discharging to 2.5 V under conditions of constant current (CC) and 0.33 C, using an electrochemical charge and discharge device.

### (1) Capacity retention rate

The capacity retention rate was calculated using the equation below, and the results were shown in Table 5 below. Capacity retention rate (%) = {(discharge capacity after 300 cycles)/(discharge capacity after 1 cycle)} × 100

### (2) Resistance increase rate

After one cycle of charge and discharge, the discharge capacity after one cycle was measured using an electrochemical charge and discharge device, SOC was adjusted to SOC of 50%, and a pulse of 2.5 C was applied for 10 seconds to calculate the initial resistance through the difference between the voltage before applying the pulse and the voltage after applying the pulse.

After 300 cycles of charging and discharging, the resistance after 300 cycles was calculated in the same manner as above, the resistance increase rate was calculated using the equation below, and the results are shown in Table 5 below. Resistance increase rate (%) = (resistance after 300 cycles - initial resistance)/initial resistance × 100

### Reference Experiment Example B-2

Each of the lithium secondary batteries of Reference Examples 1B to 3B prepared above was subjected to initial charge and discharge, which included charging to 4.4 V and 0.05 C under conditions of CC/CV and 0.33 C at 25 °C and then discharging to 2.5 V under conditions of CC and 0.33 C. Then, the lithium secondary battery was charged to 4.4 V and 40 C under conditions of CC/CV, 0.33 C at 25 °C, and then stored at 60 °C for 12 weeks.

### (1) Capacity retention rate

After storage for 12 weeks, the lithium secondary battery was charged to 4.4 V, 0.05 C under conditions of CC/CV and 0.33 C at 25 °C, and discharged to 2.5 V under conditions of 0.33 C to measure the capacity during discharge.

The capacity retention rate was calculated according to the equation below, and the results were shown in Table 5 below. Capacity maintenance rate (%) = (discharge capacity after 12 weeks of storage/initial discharge capacity) × 100

### (2) Resistance increase rate

After the initial charge and discharge, the capacity was checked at room temperature. After that, the lithium secondary battery was charged with SOC 50% based on the discharge capacity, and discharged at 2.5 C current for 10 seconds. Then, the resistance was measured using the difference in voltage drop at this time, which was used as the initial resistance. After 12 weeks of storage at 60°C, the resistance was measured in the same manner, which used as the final resistance. Then, the resistance increase rate was calculated using the following equation. The results are shown in Table 4 below. Resistance increase rate (%) = (final resistance - initial resistance)/initial resistance )× 100

**Table 5**

| | Reference Experiment Example B-1 | | Reference Experiment Example B-2 | |
|---|---|---|---|---|
| | Capacity retention rate (%) | Resistance increase rate (%) | Capacity retention rate (%) | Resistance increase rate (%) |
| Reference Example 1B | 87 | 18 | 88 | 13 |
| Reference Example 2B | 87 | 17 | 88 | 15 |
| Reference Example 3B | 86 | 18 | 90 | 15 |

Referring to Table 5, it can be seen that the lithium secondary battery of Reference Example 1B had a relatively small improvement in effect compared to Reference Examples 2B and 3B, even though the first additive and the second additive are used as the additives for the non-aqueous electrolyte additives. For example, in the case of Reference Examples 1B to 3B where Li[Ni_{0.6}Co_{0.2}Mn_{0.2}]O₂ was used as the positive electrode active material, the effect was not improved even when the first additive and the second additive were used in combination. Rather, Reference Example 1B has capacity retention rate during cycle charge/discharge or high temperature storage that is equal or less compared to Examples 2B and 3B.

Further, referring to Tables 1, 2, and 5, it can be seen that the high-temperature lifespan performance and high-temperature storage performance of Reference Example 1B were significantly reduced compared to Examples 1 to 5. From this, it can be understood that the effect of using the combination of the first additive and the second additive according to the present disclosure is uniquely exerted when the lithium transition metal oxide represented by the formula X is used as a positive electrode active material.

From the foregoing, it will be appreciated that various embodiments of the present disclosure have been described herein for purposes of illustration, and that various modifications may be made without departing from the scope and spirit of the present disclosure. Accordingly, the various embodiments disclosed herein are not intended to be limiting, with the true scope and spirit being indicated by the following claims.

## Claims

1. A lithium secondary battery comprising:
a positive electrode;
a negative electrode;
a separator interposed between the positive electrode and the negative electrode; and
a non-aqueous electrolyte,
wherein the positive electrode includes a positive electrode active material,
the positive electrode active material includes a lithium transition metal oxide represented by Formula X below,
the non-aqueous electrolyte includes a lithium salt, an organic solvent, and an additive,
the additive includes a first additive and a second additive,
the first additive includes a phosphate-based additive having a silyl group, and
the second additive includes a compound represented by Formula 1 below:
(Formula X) Li₁₊ₓ[NiₐCo_{b}Mn_{c}M¹_{d}]O_{2+w}
wherein, x, a, b, c, d, and w satisfy 0≤x≤0.5, a+b+c+d = 1, 0.5≤a≤0.7, 0<b≤0.15, c=1-a-b-d, 0≤d≤0.1, 0≤b/a≤0.2, 1≤a/c≤3, and 0≤w≤1, and
M¹ is at least one selected from W, Cu, Fe, V, Cr, Ti, Zr, Zn, Al, In, Ta, Y, La, Sr, Ga, Sc, Gd, Sm, Ca, Ce, Nb, Mg, B, and Mo, 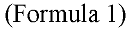 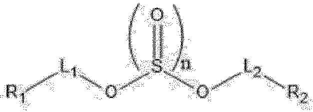
wherein,
n is 1 or 2,
L₁ and L₂ are each independently a direct bond or a substituted or unsubstituted alkylene group having 1 to 6 carbon atoms,
R₁ and R₂ are each independently selected from a substituent represented by Formula 2: 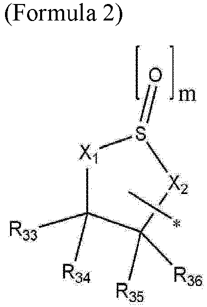
wherein,
m is 1 or 2,
X₁ and X₂ are each independently -O- or -C(R₃₁)(R₃₂)-, provided that at least one of X₁ and X₂ is -O-,
R₃₁ to R₃₆ are each independently hydrogen, an alkyl group having 1 to 6 carbon atoms, -C(=O)-R₄, or -R₅-O-C(=O)-R₆,
R₄ and R₆ are each independently a substituted or unsubstituted alkyl group having 1 to 6 carbon atoms, an alkenyl group having 2 to 20 carbon atoms, an alkynyl group having 2 to 20 carbon atoms, or a substituted or unsubstituted aryl group having 6 to 20 carbon atoms,
R₅ is a substituted or unsubstituted alkylene group having 1 to 6 carbon atoms,
each substituent of L₁, L₂, R₄, R₅, and R₆ is at least one independently selected from the group consisting of deuterium, -F, -Cl, -Br, -I, -CN, -NO₂, and -SO₃,
* is a binding position to L₁ or L₂,
when L₁ and L₂ are both direct bonds, then R₁ and R₂ are not simultaneously CS-7 below, and
when L₁ and L₂ are both methylene groups, and n is 2, then R₁ and R₂ are not simultaneously CS-2 below.

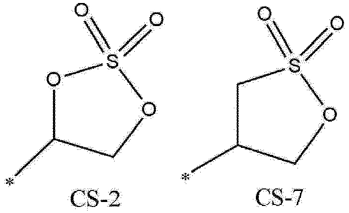

2. The lithium secondary battery according to claim 1, wherein the first additive is tris(trimethylsilyl) phosphate.

3. The lithium secondary battery according to claim 1, wherein the first additive is included in the non-aqueous electrolyte in an amount of 0.01% by weight to 10% by weight.

4. The lithium secondary battery according to claim 1, wherein the second additive is included in the non-aqueous electrolyte in an amount of 0.01% by weight to 10% by weight.

5. The lithium secondary battery according to claim 1, wherein R₁ and R₂ are each independently selected from the group consisting of CS-1 to CS-15:

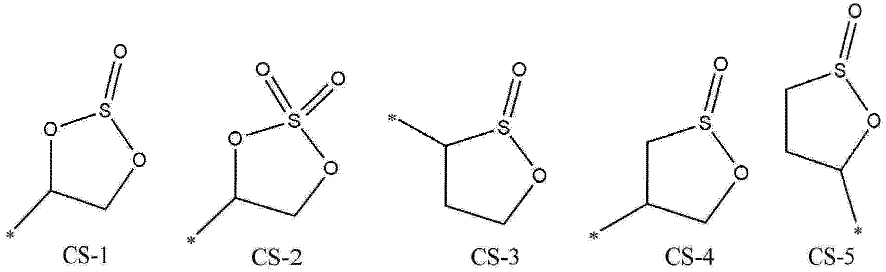

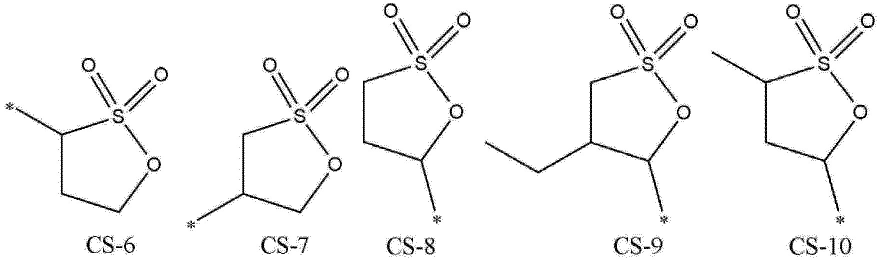

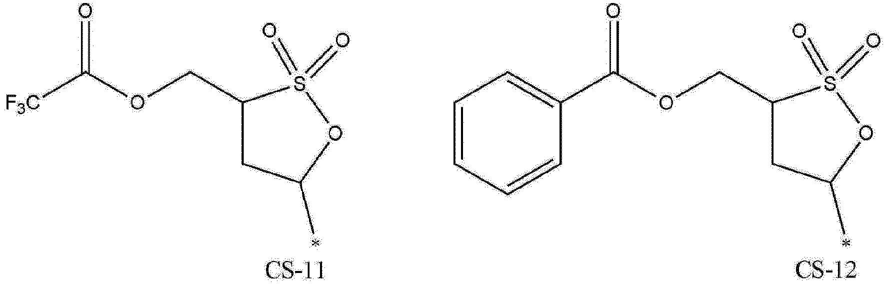

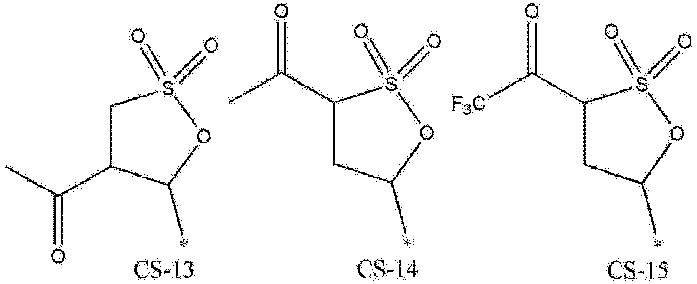

6. The lithium secondary battery according to claim 5, wherein R₁ and R₂ are each independently selected from the group consisting of CS-1, CS-2, CS-5, CS-8, CS-10, and CS-11.

7. The lithium secondary battery according to claim 1, wherein L₁ and L₂ are methylene groups.

8. The lithium secondary battery according to claim 1, wherein the compound represented by Formula 1 includes at least one compound selected from the group consisting of Compounds A to R:

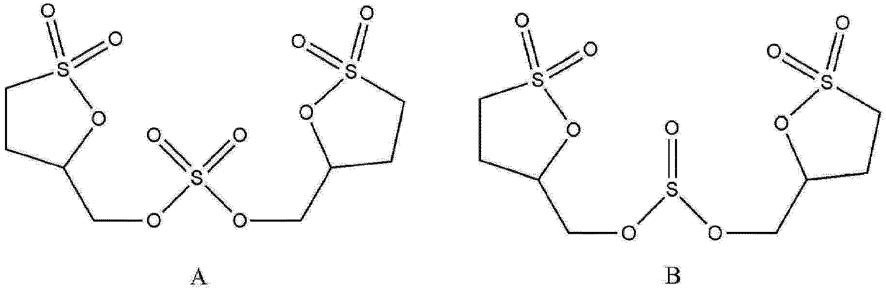

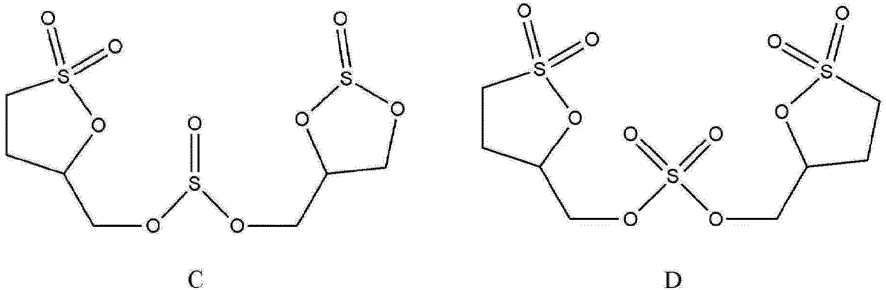

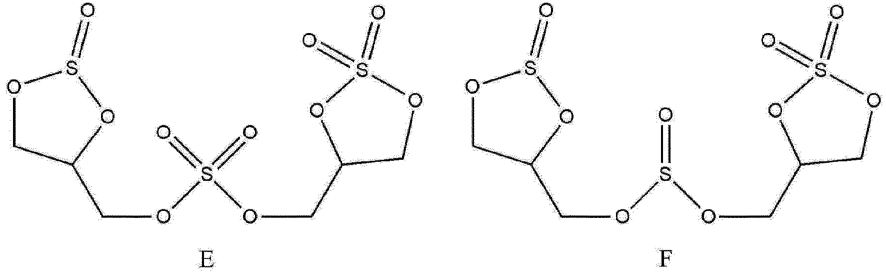

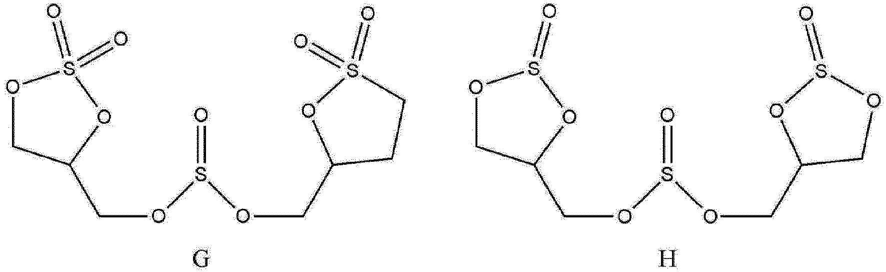

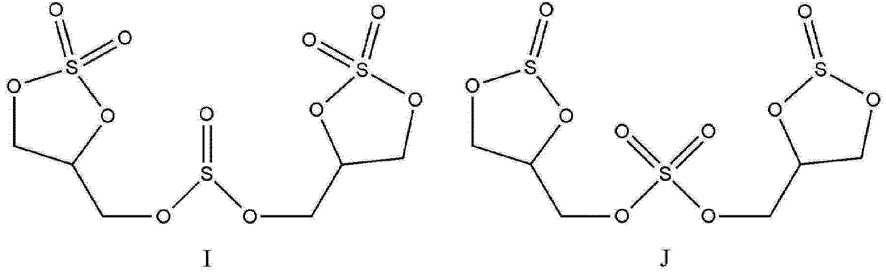

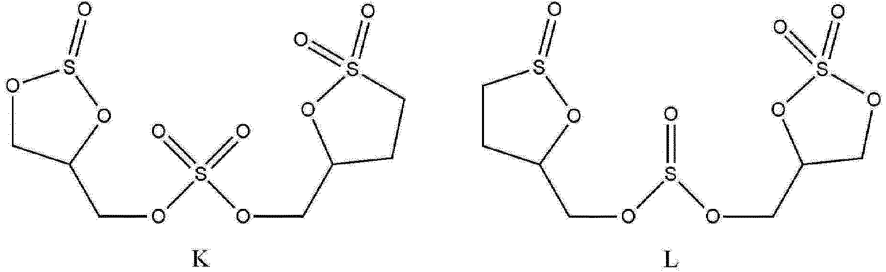

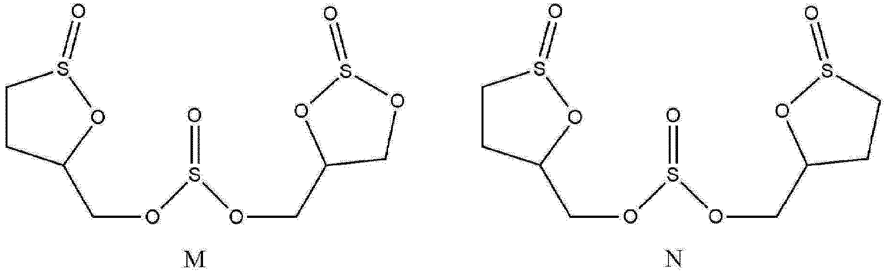

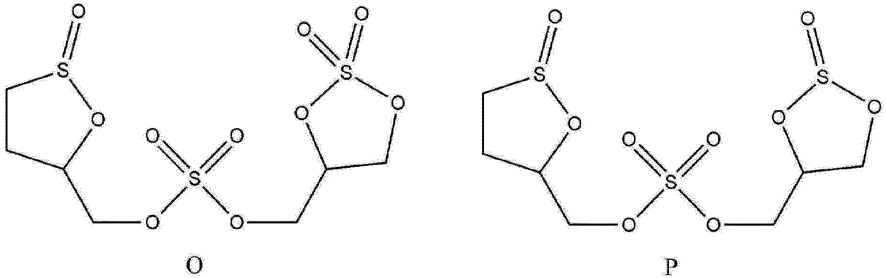

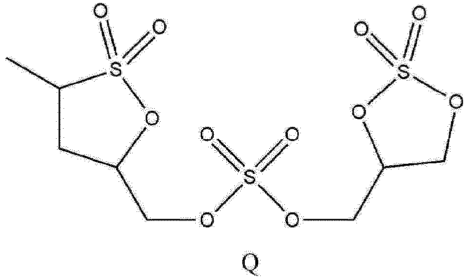

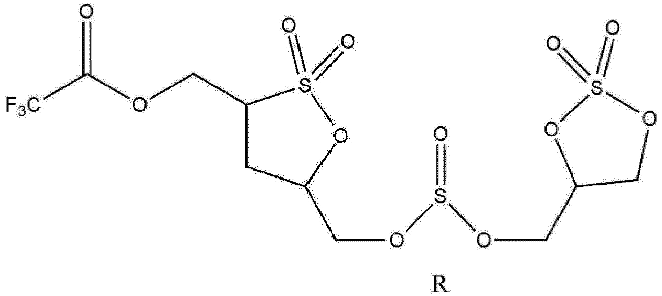

9. The lithium secondary battery according to claim 1, wherein the lithium salts include at least one selected from the group consisting of LiCl, LiBr, LiI, LiBF₄, LiClO₄, LiAlO₄, LiAlCl₄, LiPF₆, LiSbF₆, LiAsF₆, LiB₁₀Cl₁₀, LiBOB (LiB(C₂O₄)₂), LiCF₃SO₃, LiFSI (LiN(SO₂F)₂), LiCH₃SO₃, LiCF₃CO₂, LiCH₃CO₂, and LiBETI (LiN(SO₂CF₂CF₃)₂).

10. The lithium secondary battery according to claim 1, wherein the lithium salt is included in the non-aqueous electrolyte in a molar concentration of 0.5 M to 5.0 M.

11. The lithium secondary battery according to claim 1, wherein the organic solvent includes at least one selected from the group consisting of a cyclic carbonate-based organic solvent, a linear carbonate-based organic solvent, a linear ester-based organic solvent, and a cyclic ester-based organic solvent.

12. A method of manufacturing a lithium secondary battery, comprising:
storing, in a battery case, an electrode assembly including a positive electrode, a negative electrode, and a separator interposed between the positive electrode and the negative electrode; and
injecting a non-aqueous electrolyte into the battery case in which the electrode assembly is stored,
wherein the positive electrode includes a positive electrode active material,
the positive electrode material includes a lithium transition metal oxide represented by Formula X below,
the non-aqueous electrolyte includes a lithium salt, an organic solvent, and an additive,
the additive includes a first additive and a second additive,
the first additive includes a phosphate-based additive having a silyl group, and
the second additive includes a compound represented by Formula 1 below:
(Formula X) Li₁₊ₓ[NiₐCo_{b}Mn_{c}M¹_{d}]O_{2+w}
wherein, x, a, b, c, d, and w satisfy 0≤x≤0.5, a+b+c+d = 1, 0.5≤a≤0.7, 0≤b≤0.15, c=1-a-b-d, 0≤d≤0.1, 0≤b/a≤0.2, 1≤a/c≤3, and 0≤w≤1, and
M¹ is at least one selected from W, Cu, Fe, V, Cr, Ti, Zr, Zn, Al, In, Ta, Y, La, Sr, Ga, Sc, Gd, Sm, Ca, Ce, Nb, Mg, B, and Mo, 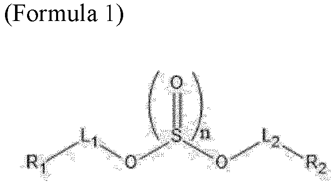
wherein,
n is 1 or 2,
L₁ and L₂ are each independently a direct bond or a substituted or unsubstituted alkylene group having 1 to 6 carbon atoms,
R₁ and R₂ are each independently selected from a substituent represented by Formula 2: 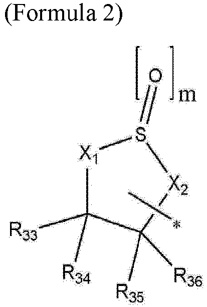
wherein,
m is 1 or 2,
X₁ and X₂ are each independently -O- or -C(R₃₁)(R₃₂)-, provided that at least one of X₁ and X₂ is -O-,
R₃₁ to R₃₆ are each independently hydrogen, an alkyl group having 1 to 6 carbon atoms, -C(=O)-R₄, or -R₅-O-C(=O)-R₆,
R₄ and R₆ are each independently a substituted or unsubstituted alkyl group having 1 to 6 carbon atoms, an alkenyl group having 2 to 20 carbon atoms, an alkynyl group having 2 to 20 carbon atoms, or a substituted or unsubstituted aryl group having 6 to 20 carbon atoms,
R₅ is a substituted or unsubstituted alkylene group having 1 to 6 carbon atoms,
each substituent of L₁, L₂, R₄, R₅, and R₆ is at least one independently selected from the group consisting of deuterium, -F, -Cl, -Br, -I, -CN, -NO₂, and -SO₃,
* is a binding position to L₁ or L₂,
when L₁ and L₂ are both direct bonds, then R₁ and R₂ are not simultaneously CS-7 below, and
when L₁ and L₂ are both methylene groups, and n is 2, then R₁ and R₂ are not simultaneously CS-2 below.

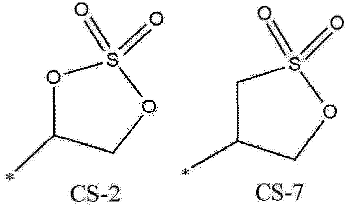

13. The method according to claim 12, wherein the first additive is tris(trimethylsilyl) phosphate.

14. The method according to claim 12, wherein the first additive is included in the non-aqueous electrolyte in an amount of 0.01% by weight to 10% by weight.

15. The method according to claim 12, wherein the second additive is included in the non-aqueous electrolyte in an amount of 0.01% by weight to 10% by weight.

16. The method according to claim 12, wherein R₁ and R₂ are each independently selected from the group consisting of CS-1 to CS-15:

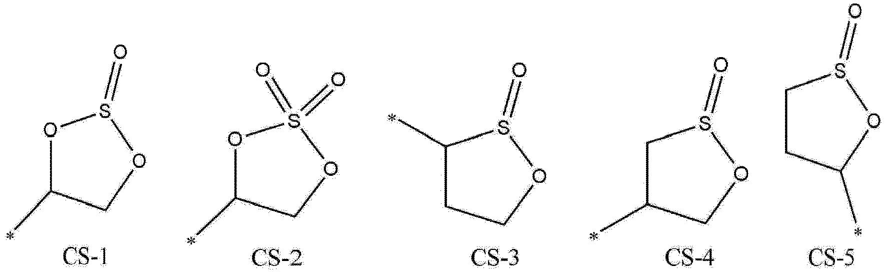

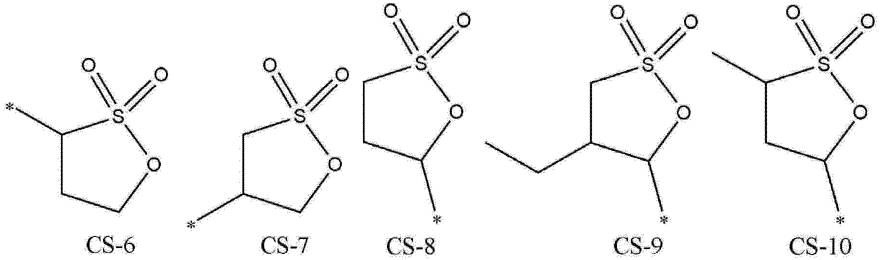

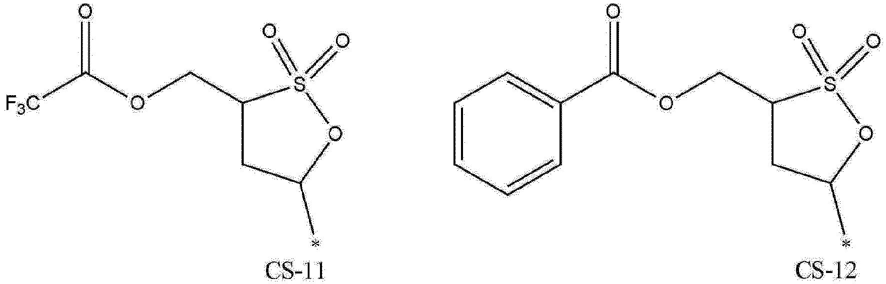

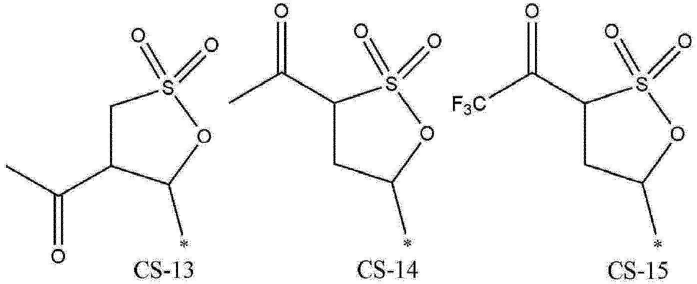

17. The method according to claim 16, wherein R₁ and R₂ are each independently selected from the group consisting of CS-1, CS-2, CS-5, CS-8, CS-10, and CS-11.

18. The method according to claim 12, wherein L₁ and L₂ are methylene groups.

19. The method according to claim 12, wherein the compound represented by Formula 1 includes at least one compound selected from the group consisting of Compounds A to R:

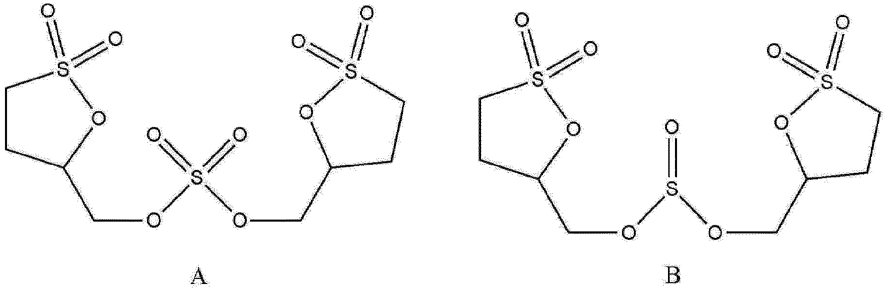

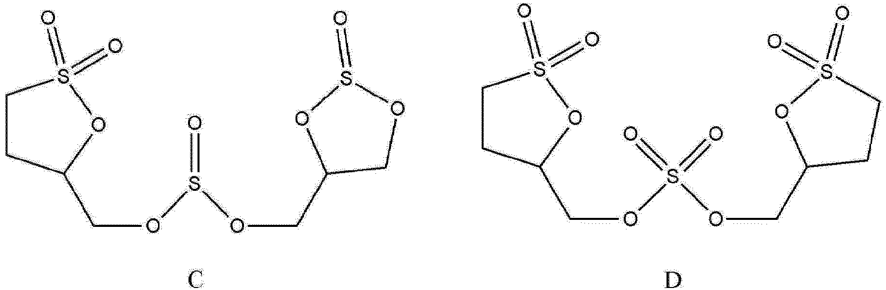

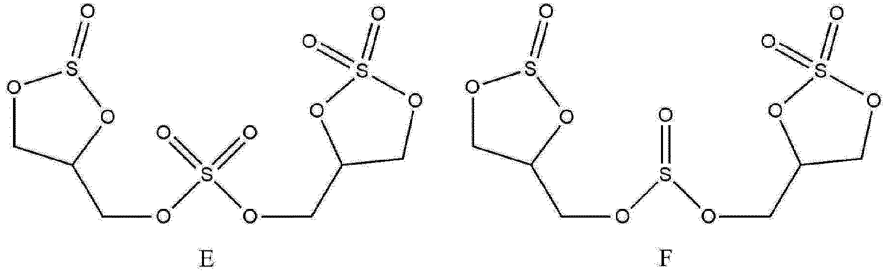

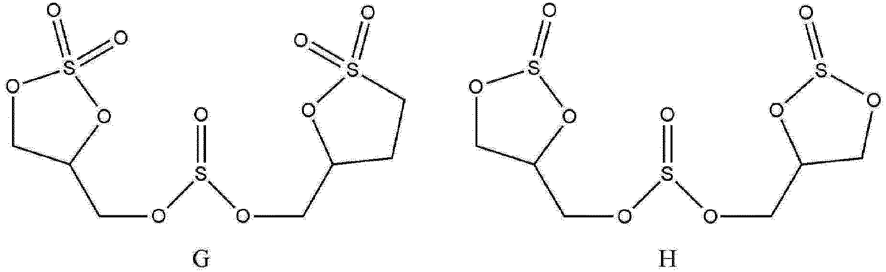

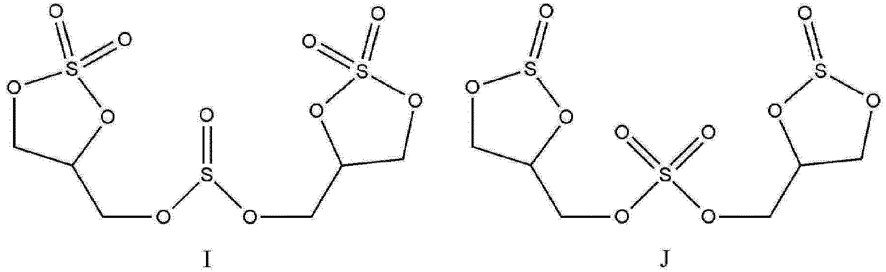

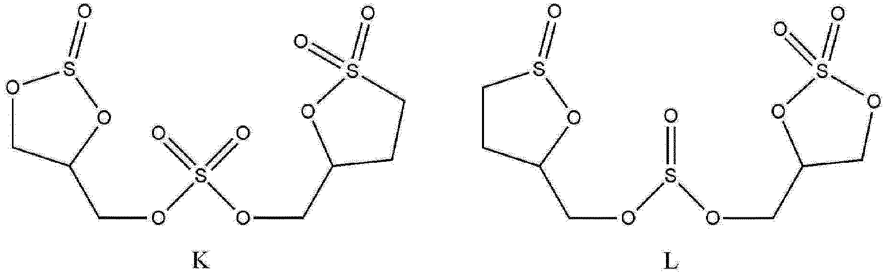

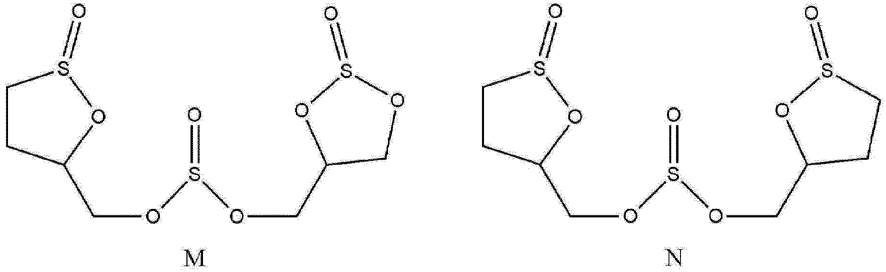

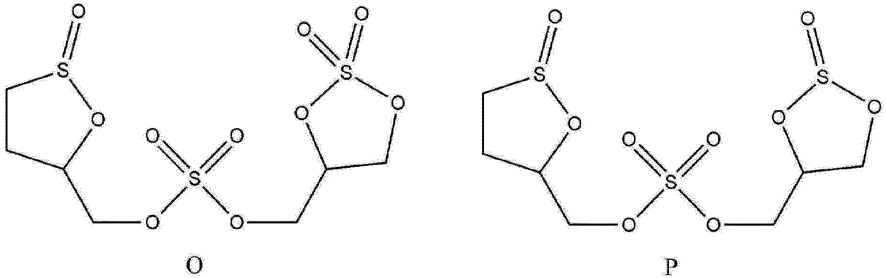

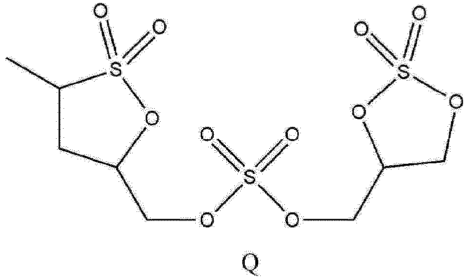

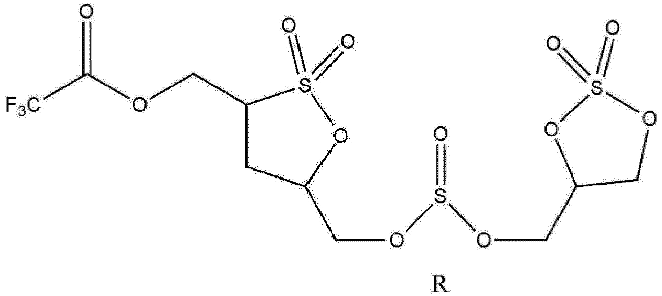

20. The method according to claim 12, wherein the lithium salts include at least one selected from the group consisting of LiCl, LiBr, LiI, LiBF₄, LiClO₄, LiAlO₄, LiAlCl₄, LiPF₆, LiSbF₆, LiAsF₆, LiB₁₀Cl₁₀, LiBOB (LiB(C₂O₄)₂), LiCF₃SO₃, LiFSI (LiN(SO₂F)₂), LiCH₃SO₃, LiCF₃CO₂, LiCH₃CO₂, and LiBETI (LiN(SO₂CF₂CF₃)₂).
